# EUROPEAN PATENT SPECIFICATION

(11) **EP 2 921 967 B1**
(45) Date of publication and mention of the grant of the patent: **22.11.2017**
(21) Application number: 13854533.0
(22) Date of filing: 17.10.2013
(51) Int. Cl.: H04L 12/18

(54) **DATA SHARING SYSTEM**
SYSTEM ZUR GEMEINSAMEN DATENNUTZUNG
SYSTÈME DE PARTAGE DE DONNÉES

(30) Priority: 19.11.2012 JP 2012253106
(43) Date of publication of application: 23.09.2015
(73) Proprietor: NEC Corporation, Tokyo 108-8001 (JP)
(72) Inventor: FUJITA, Norihito, Tokyo 108-8001 (JP); UEDA, Hirofumi, Tokyo 108-8001 (JP)
(74) Representative: Vossius & Partner Patentanwälte Rechtsanwälte mbB
(86) International application number: PCT/JP2013/006156
(87) International publication number: WO 2014/076877

(56) References cited:
- WO-A1-2011/114584
- JP-A- 2002 175 234
- JP-A- 2005 267 157
- JP-A- 2007 086 902
- US-A1- 2012 246 275

## Description

### [Technical Field]

The present invention relates to a data sharing system, a data sharing method, a communication terminal, and a program for sharing data between a plurality of communication terminals capable of wirelessly communicating with one another.

### [Background Art]

As a type of method for sharing data between a plurality of communication terminals, there is a method in which data is shared in a distributed manner by individual communication terminals, without using a central management apparatus such as a server.

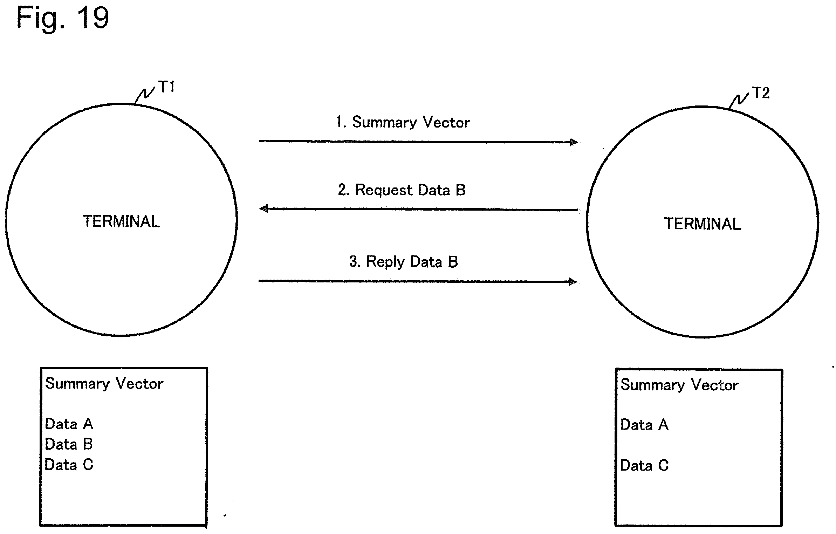

For example, a technology that communication terminals exchange information with each other and synchronize information held by each of communication terminals by using an epidemic method, when the communication terminals approach each other due to movement, has been proposed as a first related technology related to the present invention (for example, refer to Non-patent Literature 1). In the epidemic method, when a communication terminal in a network detects another communication terminal, the communication terminal and the another communication terminal exchange their summary vectors (hereinafter, termed the SVs), so that the communication terminal comprehends the content of the SV of the another communication terminal. Note that the SV is a message in which information held by a communication terminal has been summarized, and which is notified to another communication terminal. The communication terminal searches for data that the terminal itself does not hold, on the basis of the received SV, and attempts to acquire the data. For example, as illustrated in Fig. 19, a terminal T1 and a terminal T2 having approached each other due to movement exchange SVs with each other. Next, the terminal T2 checks whether there is any data (content) that the terminal does not hold, by comparing the SV of the terminal itself with the SV of the terminal T1. In the example in Fig. 19, the terminal T2 does not hold data B, and therefore sends an acquisition request for the data B to the terminal T1, and acquires the data B from the terminal T1. By all the terminals within the network repeatedly performing the foregoing operation, the individual terminals equalize the information held by each of the terminals.

Furthermore, in the information sharing by the aforementioned epidemic method, there is a problem that the SVs are frequently sent, and the load of bandwidth becomes high. In order to solve this problem, a technology to restrain the sending of duplicate information has been proposed as a second related technology related to the present invention (for example, refer to Patent Literature 1). More specifically, in a system in which data is shared between a plurality of communication terminals each of which wirelessly communicates with another communication terminal without using an access point, each communication terminal is configured as follows. That is, each communication terminal has an internal estimation unit that estimates data that the another communication terminal presently holds, by using the reception history of the SV received from the another communication terminal. And, each communication terminal has a duplication determination unit that determines whether or not any data that the internal estimation unit has estimated that another communication terminal presently holds and any data that the terminal itself holds are the same as each other. Furthermore, each communication terminal has an information exchange unit that sends the SV which includes the information that the terminal itself holds, when the duplication determination unit determines that those data are not the same.

Furthermore, in the information sharing by the aforementioned epidemic method, there is a problem that conveying data promptly to the neighborhood is difficult. In order to solve this, a communication terminal, which intentionally changes the SV to be notified to another communication terminal, has been proposed as a third related technology related to the present invention (for example, refer to Patent Literature 2). More specifically, it is assumed that, a second communication terminal ,that holds the data X, exists in the area where a first communication terminal, that holds data X and Y, is wirelessly communicable from. Furthermore, it is assumed that, a third communication terminal, that holds the data X, exits in the area outside the wireless communication area of the first communication terminal and inside the wireless communication area of the second communication terminal. If the first communication terminal sends to the neighborhood a notification message that contains all the data X and Y that the first terminal itself holds, the second communication terminal executes the following processes. The second communication terminal receives the notification message from the first communication terminal, and acquires and accumulates the data Y that the second terminal itself does not hold. After that, the second communication terminal determines that the first communication terminal only holds the same data as the second terminal itself, and does not send afresh a notification message that contains the data X and Y that the second terminal itself holds. Therefore, in the aforementioned third related technology, the first communication terminal excludes the data X that is held by both of the terminal itself and the second communication terminal, and sends a notification message, that contains only the data Y that is held by the first terminal itself, to the neighborhood. The second communication terminal receives this notification message, and acquires and accumulates the data Y that the terminal itself does not hold. After that, the second communication terminal determines that the first communication terminal does not hold the data X that the second terminal itself holds, and sends a notification message that contains the data X and Y to the neighborhood. This notification message reaches not only the first communication terminal but also the third communication terminal. Therefore, receiving this notification message, the third communication terminal takes this opportunity to acquire the data Y from the second communication terminal and accumulates it in the terminal itself.

Furthermore, as a fourth related technology related to the present invention, a technology has been proposed that when data sharing is executed by vehicle-to-vehicle communication performed between computers mounted in vehicles, the data to be shared is selected at the sender side (for example, refer to Patent Literature 3). More specifically, with respect to a plurality of traffic information files, document information files, and image information files, a computer mounted in a certain vehicle acquires and assigns evaluation scores of the individual files, according to the attributes of the corresponding data files. Next, the computer selects one data file from the plurality of data files on the basis of selection probabilities for the data files set by the proportions according to the evaluation scores. Then, the computer sends this selected data file to the computer mounted in another vehicle.

Furthermore, as a fifth related technology related to the present invention, a technology has been proposed that when data are shared by communication between communication terminals connected to a network, the data to be shared is selected at the reception side (for example, refer to Patent Literature 4). More specifically, if new shared data are generated in a certain communication terminal, the data and its attributes are sent to another communication terminal. The another communication terminal refers to a sharing policy in which attributes of kinds of data to be shared are defined. Then, if the attributes of the data received conform to the sharing policy, the another communication terminal accumulates the data in the terminal itself, but if not, the another communication terminal discards the data.

[PTL 1]: WO2011/071045 A1
[PTL 2]: WO2011/114584 A1
[PTL 3]: JP- 2004-334624 A
[PTL 4]: JP-4350640 A

US 2012/0246275 A1 relates to an information sharing system with multiple communication devices that wirelessly connect with other communication devices in order to communicate with them without going through an access point.

[NPL 1] : A. Vahdat, D. Becker, "Epidemic Routing for Partially-Connected Ad Hoc Networks," Tech. Report CS-200006, Duke University, Apr. 2000

### [Summary of Invention]

### [Technical Problem]

The aforementioned first to third related technologies, in which communication terminals perform synchronization of held information by exchanging each other's information, are a data sharing of full synchronization type, that all the communication terminals hold the same data. Hence, in the aforementioned first to third related technologies, it is difficult to limit the data to be shared between the communication terminals, to a part of the whole data.

In the aforementioned fourth and fifth related technologies, it is possible to limit the shared data to a part of the data held by a communication terminal. However, in the fourth related technology, a communication terminal that accumulates data selects data to be sent to another communication terminal from the accumulated data, and sends the selected data. Then, the another communication terminal accumulates the received data in the terminal itself as shared data. Note that there is no guarantee that the receiver side terminal does not hold the data selected by the sender side terminal. Therefore, there is a wasteful communication that the same data as the data that is already accumulated by the another communication terminal, is sent and received between the communication terminals. Furthermore, in the fifth related technology, a communication terminal that accumulates data sends the accumulated data to another communication terminal. Then, the another communication terminal selects whether the received data is to be accumulated as shared data in the terminal itself or to be discarded, according to the sharing policy. Therefore, there is a wasteful communication that data that will not be accumulated in the another communication terminal are sent and received between the communication terminals.

It is an object of the present invention to provide a data sharing system that solves the above-stated problem, in other words, the problem that needless data sending and receiving occurs between communication terminals, in order to limit the data to be shared between the communication terminals to a part of the whole data that the communication terminals hold.

### [Solution to Problem]

The solution is provided by the subject-matter of the independent claims.

### [Advantageous Effects of Invention]

The present invention, because of having a construction as described above, is capable of limiting data to be shared between communication terminals to a part of the data that the communication terminals hold, without performing the wasteful sending and receiving of data between the communication terminals.

### [Brief Description of Drawings]

[Fig. 1] Fig. 1 is a block diagram of a data sharing system in accordance with a first exemplary embodiment of the present invention.
[Fig. 2] Fig. 2 is a diagram illustrating an example of a sequence of a communication message sent and received between communication terminals that constitute the data sharing system in accordance with the first exemplary embodiment of the present invention.
[Fig. 3] Fig. 3 is a block diagram of a data sharing system in accordance with a second exemplary embodiment of the present invention.
[Fig. 4] Fig. 4 is a diagram illustrating an example of a sequence of a communication message sent and received between communication terminals that constitute the data sharing system in accordance with the second exemplary embodiment of the present invention.
[Fig. 5] Fig. 5 is a block diagram of a data sharing system in accordance with a third exemplary embodiment of the present invention.
[Fig. 6] Fig. 6 is a diagram illustrating an example of attributes of data in the third exemplary embodiment of the present invention.
[Fig. 7] Fig. 7 is a diagram illustrating an example of rules used when a holding list is created in the third exemplary embodiment of the present invention.
[Fig. 8] Fig. 8 is a flowchart illustrating an example of a process that a communication terminal in the third exemplary embodiment of the present invention executes at a predetermined timing.
[Fig. 9] Fig. 9 is a flowchart illustrating an example of a process that a communication terminal in the third exemplary embodiment of the present invention executes at the moment of receiving a holding list from another communication terminal.
[Fig. 10] Fig. 10 is a flowchart illustrating a process example of the list creation unit of the communication terminal in the third exemplary embodiment of the present invention.
[Fig. 11] Fig. 11 is a flowchart illustrating a process example of a list creation unit of a communication terminal in the third exemplary embodiment of the present invention.
[Fig. 12] Fig. 12 is a diagram illustrating an example of a content of a holding list that is notified from a communication terminal to another communication terminal in a morning hour in the third exemplary embodiment of the present invention.
[Fig. 13] Fig. 13 is a diagram illustrating an example of a content of a holding list that is notified from a communication terminal to another communication terminal in a night hour in the third exemplary embodiment of the present invention.
[Fig. 14] Fig. 14 is a diagram illustrating an example of a content of a holding list that is notified from a communication terminal to another communication terminal at the time of a disaster in the third exemplary embodiment of the present invention.
[Fig. 15] Fig. 15 is a diagram illustrating an example of a content of a holding list that is notified from a communication terminal to another communication terminal, when the communication terminal exists in Tokyo Metropolis, in the third exemplary embodiment of the present invention.
[Fig. 16] Fig. 16 is a diagram illustrating an example of a content of a holding list that is notified from a communication terminal to another communication terminal, when the communication terminal exists in Kagoshima Prefecture, in the third exemplary embodiment of the present invention.
[Fig. 17] Fig. 17 is a diagram illustrating an example content of an initial holding list and an example content of a holding list re-created, that are notified in a morning hour from a communication terminal to another communication terminal in the third exemplary embodiment of the present invention.
[Fig. 18] Fig. 18 is a block diagram illustrating an example of a hardware construction when a communication terminal in accordance with an exemplary embodiment of the present invention is configured by an electronic information processing apparatus such as a computer.
[Fig. 19] Fig. 19 is a diagram illustrating a procedure of the data sharing by an epidemic method.

### [Description of Embodiments]

Next, exemplary embodiments of the present invention will be described in detail with reference to the accompanying drawings.

### [First Exemplary Embodiment]

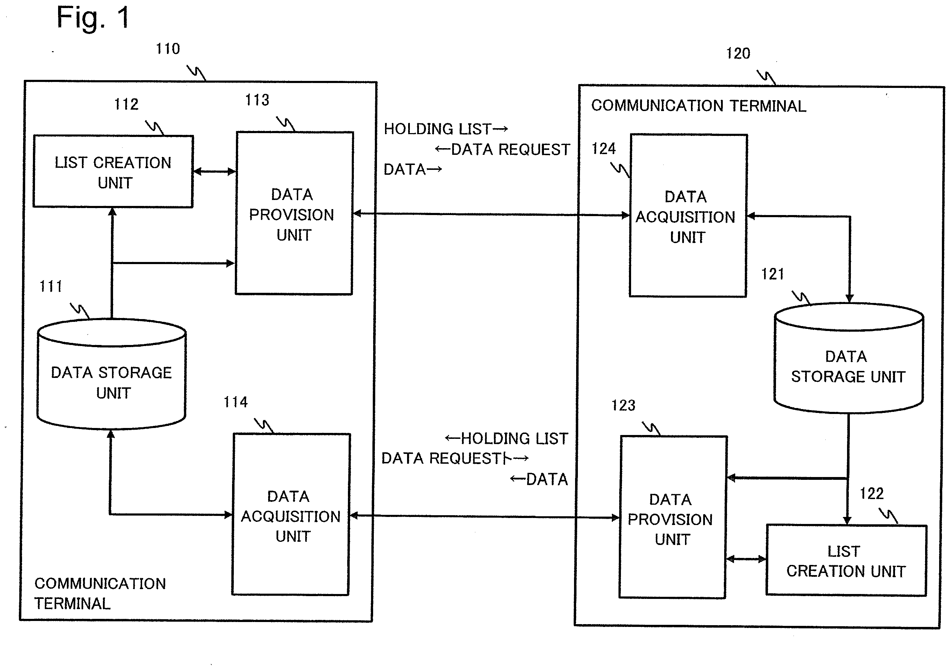

Referring to Fig. 1, a data sharing system in accordance with a first exemplary embodiment of the present invention includes a communication terminal 110 and a communication terminal 120 that are capable of wirelessly transmitting and receiving communication messages to and from each other. Both of the communication terminals 110, 120 may be mobile communication terminals, or either one of the communication terminals may be a mobile communication terminal. Furthermore, either one of the communication terminals may be a fixed communication terminal.

The communication terminal 110 includes a data storage unit 111, a list creation unit 112, a data provision unit 113, and a data acquisition unit 114.

The data storage unit 111 stores one or more pieces of data. Individual pieces of data are arbitrary. For example, the data may be any of text data, image data and voice data, and may also exist in a mixture. Furthermore, the data may also be what is called as content.

The list creation unit 112 has a function of creating a list (holding list) of data that is held by the communication terminal itself. The list creation unit 112 creates a list that is recorded with information about remaining data obtained by removing at least one piece of data, that is not intended to be shared with the another communication terminal 120, from data stored in the data storage unit 111. The list creation unit 112 is the same as in the third related technology related to the present invention in terms of intentionally changing the list of data that the communication terminal itself holds. However, the list creation unit 112 of this exemplary embodiment differs to the third related technology related to the present invention at a point that this exemplary embodiment excludes the data, that is not intended to be shared with the another communication terminal, from the list, whereas the third related technology excludes the data, that are commonly held by both of communication terminal itself and the another communication, from the list. The data that is not intended to be shared with another communication terminal can be expressed, in other words, as data that is held by the communication terminal itself but may not likely be held by the another communication terminal. The holding list is a list of information about data. The information about data may be arbitrary as long as the information can identify the data, and, for example, may be a summary vector and may also be a data identifier.

The data provision unit 113 has a function of sending the holding list created by the list creation unit 112 to the another communication terminal 120 exits in the neighborhood of the communication terminal itself 110 by using a communication message. Furthermore, the data provision unit 113 has a function of reading data, that are requested by the communication message received from the another communication terminal 120, from the data storage unit 111, and sending the data to the another communication terminal 120 by using a communication message.

The data acquisition unit 114 has a function of determining data to be acquired by comparing the data recorded in the holding list received from the another communication terminal 120 by the communication message and a list of data stored in the data storage unit 111. Furthermore, the data acquisition unit 114 has a function of sending a communication message that requests the above mentioned determined data to the another communication terminal 120. Furthermore, the data acquisition unit 114 has a function of registering, in the data storage unit 111, the data contained in the communication message received from the another communication terminal 120, as a reply to the request mentioned above.

The communication terminal 120 includes a data storage unit 121, a list creation unit 122, a data provision unit 123, and a data acquisition unit 124. The data storage unit 121, the list creation unit 122, the data provision unit 123, and the data acquisition unit 124, that are included in the communication terminal 120, have the same functions as the data storage unit 111, the list creation unit 112, the data provision unit 113, and the data acquisition unit 114, that are included in the communication terminal 110.

Next, an operation, in the data sharing system of this exemplary embodiment, that the plurality of communication terminals 110 and 120 share the data that each of the communication terminals 110 and 120 holds will be described. For convenience in description, it is assumed that during an initial state, the communication terminal 110 holds four pieces of data, that is, data A, data B, data C, and data X, and the communication terminal 120 holds four pieces of data, that is, data A, data D, data E, and data Y. It is also assumed that the communication terminal 110 does not intend to share the data C and X, of the data A, B, C and X, with another communication terminal. Furthermore, it is also assumed that the communication terminal 120 does not require to share the data E and Y, of the data A, D, E and Y, with another communication terminal. Which data is data, that is not intended to be shared with another communication terminal, may be distinguished by assigning the data with a certain marking, or may also be distinguished by separately recording the IDs, kinds, or the like of the data. The method is arbitrary.

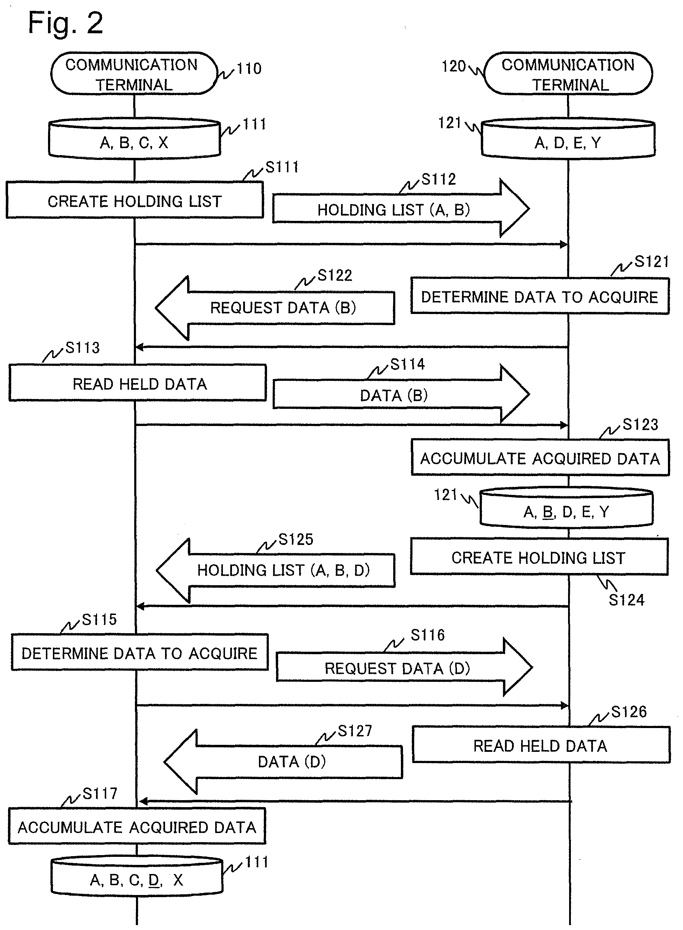

Fig. 2 illustrates an example of a sequence of a communication message that is given and received between the communication terminals 110 and 120. Hereinafter, an operation of this exemplary embodiment will be described with reference to Fig. 1 and Fig. 2

The list creation unit 112 of the communication terminal 110, for example, creates a list (holding list) of data stored in the data storage unit 111 of the communication terminal itself 110 at a predetermined timing (S111 in Fig. 2). The predetermined timing mentioned above may be, for example, a timing such as every fixed cycle, or every time new data is registered in the data storage unit 111. On this occasion, the list creation unit 112 creates a list of remaining data obtained by removing at least one piece of data, that is not intended to be shared with the another communication terminal, from the data stored in the data storage unit 111. It is assumed here that the list creation unit 112 has created a holding list in which only the data A and B are listed. The data provision unit 113 of the communication terminal 110 receives the aforementioned created holding list from the list creation unit 112, stores the holding list in a communication message, and sends the communication message to the another communication terminal 120 which exist in the neighborhood by wireless communication (S12).

The data acquisition unit 124 of the communication terminal 120 receives the aforementioned communication message sent by the communication terminal 110. Then, the data acquisition unit 124 mentioned above determines the data that is to be acquired from the communication terminal 110 by comparing the holding list contained in the aforementioned communication message and the list of data stored in the data storage unit 121 of the communication terminal 120 itself (S121). In this step, the data acquisition unit 124 determines that all the data, that the communication terminal 120 itself does not hold, as data to be acquired, among the data recorded in the holding list. In this example, the data to be acquired is the data B. The data acquisition unit 124 sends a communication message that requests acquisition of this determined data B to the communication terminal 110 by wireless communication (S122).

The data provision unit 113 of the communication terminal 110 receives the aforementioned communication message sent by the communication terminal 120. Then, the data provision unit 113 reads the data B from the data storage unit 111 (S113), and stores the data B into a communication message, and sends the communication message to the communication terminal 120 (S 114).

The data acquisition unit 124 of the communication terminal 120 receives the aforementioned communication message sent by the communication terminal 110. Then, the data acquisition unit 124 accumulates the data B contained in the communication message in the data storage unit 121 (S123).

Due to the foregoing operation, the data B held by the communication terminal 110 is accumulated in the data storage unit 121 of the communication terminal 120. Due to this, the data B is newly shared between the communication terminals 110 and 120.

Next, when new data having been registered in the data storage unit 121, the list creation unit 122 of the communication terminal 120 creates a list (holding list) of data stored in the data storage unit 121 of the communication terminal 120 itself (S124 in Fig. 2). On this occasion, the list creation unit 122 creates a list that is recorded with information about remaining data obtained by removing at least one piece of data that is not intended to be shared with the another communication terminal, from the data stored in the data storage unit 121. In this example, it is assumed that the list creation unit 122 has created a holding list which is recorded with only the data A, B and D, by omitting the data E and Y, among the data A, B, D, E and Y that are presently held. The data provision unit 123 of the communication terminal 120 receives the aforementioned created holding list from the list creation unit 122. The data provision unit 123 stores the holding list into a communication message, and sends the communication message to the another communication terminal 110 in the neighborhood (S125).

The data acquisition unit 114 of the communication terminal 110 receives the aforementioned communication message sent by the communication terminal 120. Then, the data acquisition unit 114 determines the data that is to be acquired from the communication terminal 120 by comparing the holding list contained in the communication message and the list of data stored in the data storage unit 111 of the communication terminal 110 itself (S 115). In this step, the data acquisition unit 114 determines that all the data, that the communication terminal 120 itself does not hold, among the data recorded in the holding list, as data to be acquired. As a result, the data D is determined as the data to be acquired. The data acquisition unit 114 sends a communication message that requests acquisition of this determined data D to the communication terminal 120 by wireless communication (S116).

The data provision unit 123 of the communication terminal 120, when having received the aforementioned communication message sent by the communication terminal 110, reads the data D from the data storage unit 121 (S126). Then, the data provision unit 123 stores the data D in a communication message, and sends the communication message to the communication terminal 110 (S127).

The data acquisition unit 114 of the communication terminal 110 receives the aforementioned communication message sent by the communication terminal 120. Then, the data acquisition unit 114 accumulates the data D contained in the communication message in the data storage unit 111 (S 117).

Due to the foregoing operation, the data D held by the communication terminal 120 is accumulated in the data storage unit 111 of the communication terminal 110, and the data D is newly shared between the communication terminals 110 and 120.

Thus, according to this exemplary embodiment, the data to be shared between communication terminals can be limited to a part of the data held by the communication terminals. A reason for this is as follows. That is, a communication terminal does not record all the data that the communication terminal itself holds into a holding list to be notified to another communication terminal in the neighborhood, but records the remaining data obtained by removing at least one piece of data that is not intended to be shared with the another communication terminal. Due to this, even if another communication terminal having received the holding list requests a difference between the received holding list and the list of data held by the communication terminal itself, the another communication terminal cannot acquire the data (the data not recorded in the holding list).

Furthermore, according to this exemplary embodiment, the data, among the data that are held by a communication terminal, to be transferred from the communication terminal to another communication terminal is data that is to be shared between the communication terminals. Therefore, there is not a wasteful communication that the data that is not scheduled to be shared between communication terminals is sent and received between the communication terminals.

### [Second Exemplary Embodiment]

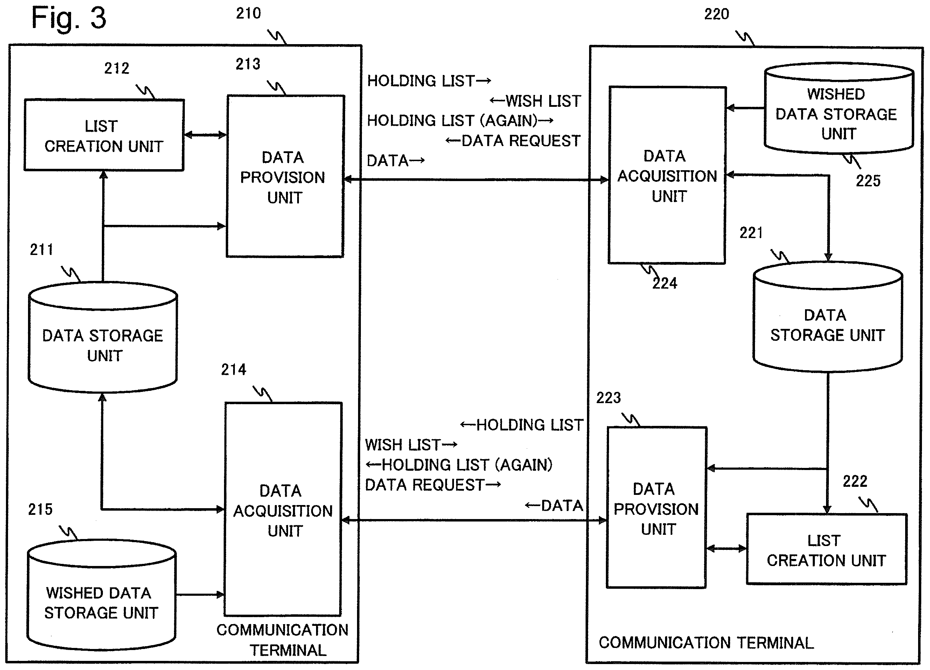

Referring to Fig. 3, a data sharing system in accordance with a second exemplary embodiment of the present invention includes a communication terminal 210 and a communication terminal 220 that are capable of wirelessly communicating with each other. Both of the communication terminals 210 and 220 may be mobile communication terminals, and also, either one of the terminals may be a mobile communication terminal. Furthermore, either one of the communication terminals 210 and 220 may be a fixed communication terminal.

The communication terminal 210 includes a data storage unit 211, a list creation unit 212, a data provision unit 213, a data acquisition unit 214, and a wished data storage unit 215.

The data storage unit 211 has substantially the same functions as the data storage unit 111 in the first exemplary embodiment, and stores one or more pieces of data.

The wished data storage unit 215 stores information that identifies the data that the communication terminal itself particularly wishes to acquire. The information that identifies data may be, for example, a summary vector, or may also be a data identifier.

The list creation unit 212, similarly to the list creation unit 112 in the first exemplary embodiment, has the following functions. That is, the list creation unit 212 has a function of creating a list (holding list) that is recorded with information about remaining data obtained by removing at least one piece of data that is not intended to be shared with the another communication terminal 220, from the whole data stored in the data storage unit 211. Furthermore, the list creation unit 212 has a function of re-creating a holding list by following the request from the data provision unit 213. More specifically, the list creation unit 212 is provided, from the data provision unit 213, a wish list in which one or more pieces of data are designated, and is requested to re-create the holding list. The list creation unit 212 creates a holding list by adding information about the data stored in the data storage unit 211, among the data mentioned in the aforementioned wish list, to the previously created holding list. Then, the list creation unit 212 outputs the created holding list to the data provision unit 213.

The data provision unit 213, similarly to the data provision unit 113 in the first exemplary embodiment, has the following functions. That is, the data provision unit 213 has a function of sending the holding list created by the list creation unit 212, by the communication message, to the another communication terminal 220 exists in the neighborhood of the communication terminal itself 210. Furthermore, the data provision unit 213 has a function of reading the data requested by the communication message received from the another communication terminal 220 from the data storage unit 211 and sending the data to the another communication terminal 220 by a communication message.

Furthermore, the data provision unit 213 has a function of executing a process described below, in case that a communication message storing a list of wished data is received as a reply from the another communication terminal 220 in response to a communication message that includes a holding list, when the message has been sent to the another communication terminal 220. That is, the data provision unit 213 notifies the wish list contained in the communication message to the list creation unit 212, and requests the re-creation of the holding list. Then, the data provision unit 213 has a function of sending the holding list re-created by the list creation unit 212 to the another communication terminal 220 by a communication message.

The data acquisition unit 214 has the following functions. That is, the data acquisition unit 214 has a function of determining data that is to be acquired from the another communication terminal 220, when the communication message that includes the holding list is received from the another communication terminal 220. Furthermore, the data acquisition unit 214 has a function of sending to the another communication terminal 220 a communication message that requests the aforementioned determined data. Furthermore, the data acquisition unit 214 has a function of registering, in the data storage unit 211, data contained in the communication message received as a reply to the communication message that requests the aforementioned data. Furthermore, in the aforementioned determination of data that is to be acquired, the data acquisition unit 214 determines whether or not wished data stored in the wish list storage unit 215 is recorded in the received holding list. When the wished data is recorded in the holding list, the data acquisition unit 214 compares the received holding list and the list of data stored in the data storage unit 211, and determines data that is to be acquired. Furthermore, when the aforementioned wished data is not recorded in the holding list, the data acquisition unit 214 notifies the wish list to the another communication terminal 220 by a communication message. Then, the data acquisition unit 214 compares a re-created holding list that is received from the another communication terminal 220 after the notification and the list of data stored in the data storage unit 211, and the data acquisition unit 214 determines the data that is to be acquired.

The communication terminal 220 has a data storage unit 221, a list creation unit 222, a data provision unit 223, a data acquisition unit 224, and a wish list storage unit 225. The data storage unit 221, the list creation unit 222, the data provision unit 223, the data acquisition unit 224, and the wish list storage unit 225 that are included the communication terminal 220, have the same functions as the data storage unit 211, the list creation unit 212, the data provision unit 213, the data acquisition unit 214, and the wish list storage unit 215 that are included in the communication terminal 210.

Next, an operation, in the data sharing system of this exemplary embodiment, that a plurality of communication terminals 210 and 220 share data held by themselves with each other will be described. For the convenience of description, it is assumed that in an initial state, the communication terminal 210 holds four pieces of data, that is, data A, data B, data C, and data X. Furthermore, it is assumed that the communication terminal 220 holds four pieces of data, that is, data A, data D, data E, and data Y. In addition, it is assumed that the communication terminal 210 does not intend to share the data C and X, of the data A, B, C and X, with the another communication terminal, unless the another communication terminal particularly wishes the data. Furthermore, it is assumed that the communication terminal 220 does not intend to share the data E and Y, of the data A, D, E and Y with the another communication terminal unless the another communication terminal particularly wishes the data. Which data is the data, that is not intended to be shared with the another communication terminal unless another communication terminal particularly wishes so, may be distinguished by assigning them with some marks, or may also be distinguished by separately recording the IDs, kinds, etc. of pieces of data. The method is arbitrary. Furthermore, it is assumed that information that identifies the data E is stored in the wished data storage unit 215 of the communication terminal 210 and information that identifies the data C is stored in the wished data storage unit 225 of the communication terminal 220.

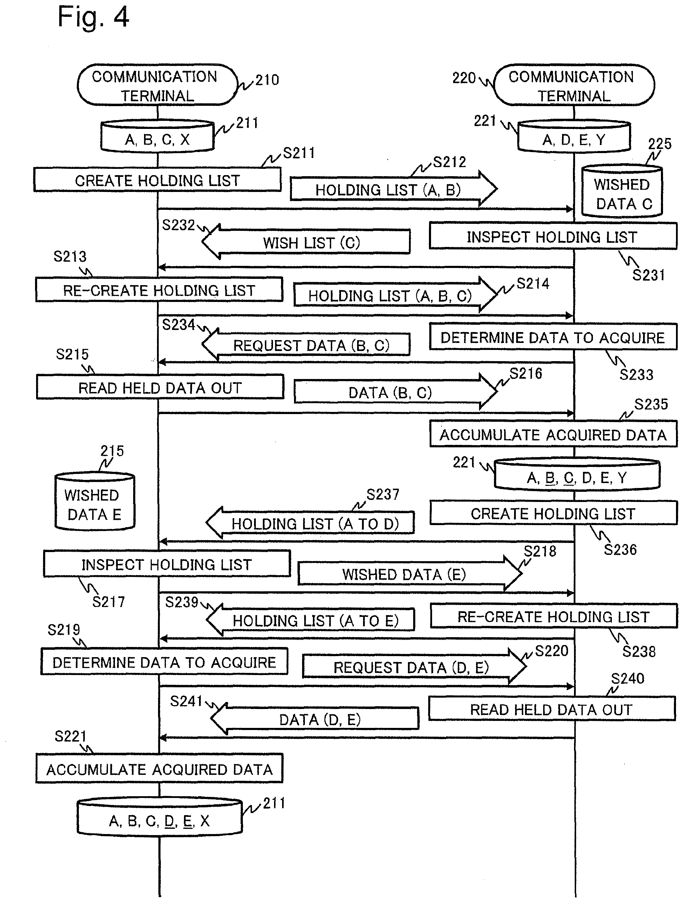

Fig. 4 illustrates an example of a sequence of messages sent and received between the communication terminals 210 and 220. Hereinafter, with reference to Fig. 3 and Fig. 4, operations of this exemplary embodiment will be described.

The list creation unit 212 of the communication terminal 210 creates, for example, at a predetermined timing, a list (holding list) of data stored in the data storage unit 211 of the communication terminal 210 itself (S211 in Fig. 4). This predetermined timing may be, for example, a timing such as a pre-set cycle or every time new data is registered in the data storage unit 211. On this occasion, the list creation unit 212 creates a list of remaining data obtained by removing at least one piece of data that is not intended to be shared with the another communication terminal unless the another communication terminal particularly wishes so, from the data stored in the data storage unit 211. In this example, it is assumed that the list creation unit 212 has created a holding list that lists only the data A and B. The data provision unit 213 of the communication terminal 210 receives the aforementioned created holding list from the list creation unit 212, stores the holding list in a communication message, and sends the communication message to another communication terminal 220 in the neighborhood (S212).

The data acquisition unit 224 of the communication terminal 220 receives the aforementioned communication message sent by the communication terminal 210. Then, the data acquisition unit 224 inspects whether or not the wished data C stored in the wished data storage unit 225 is recorded in the holding list contained in the communication message (S231). In this example, the wished data C is not recorded in the holding list, and therefore the data acquisition unit 224 sends the wish list that lists the data C to the communication terminal 210 by a communication message (S232).

When the communication terminal 210 receives the aforementioned communication message that includes the wish list, the communication terminal 210 re-creates the holding list (S213). Specifically, first, the data provision unit 213 notifies the wish list stored in the received communication message to the list creation unit 212, and requests re-creation of the holding list. Next, the list creation unit 212 checks whether or not the data C, that is recorded in the wish list, has been stored in the data storage unit 211. In this example, the data C is stored in the data storage unit 211, and therefore the list creation unit 212 re-creates the holding list by adding the data C to the previously created holding list. As a result, the re-created holding list is recorded with the data A, B and C.

The data provision unit 213 of the communication terminal 210 stores the aforementioned re-created holding list into a communication message, and sends the communication message to the communication terminal 220 (S214).

When the data acquisition unit 224 of the communication terminal 220 receives the aforementioned communication message, the data acquisition unit 224 compares the holding list stored in the message and the list of data stored in the data storage unit 221 of the communication terminal itself 220, and determines data that is to be acquired from the communication terminal 210 (S233). Herein, the data acquisition unit 224 determines all the data that is not held by the communication terminal 220 itself, among the data recorded in the holding list, as data to be acquired. As a result, the data to be acquired is data B and C. The data acquisition unit 224 sends to the communication terminal 210 a communication message that requests acquisition of the determined data B and C (S234).

When the data provision unit 213 of the communication terminal 210 receives the communication message regarding the data request sent by the communication terminal 220, the data provision unit 213 reads the data B and C from the data storage unit 211 (S215). Then, the data provision unit 213 stores the data into a communication message, and sends the communication message to the communication terminal 220 (S216).

When the data acquisition unit 224 of the communication terminal 220 receives the aforementioned communication message sent by the communication terminal 210, the data acquisition unit 224 accumulates in the data storage unit 221 the data B and C stored in the communication message (S235).

Due to the foregoing operation, the data B and C held by the communication terminal 210 are accumulated in the data storage unit 221 of the communication terminal 220, and the data B and C are newly shared between the communication terminals 210 and 220.

Next, when new data is registered in the data storage unit 221, the list creation unit 222 of the communication terminal 220 creates the list (holding list) of data stored in the data storage unit 221 of the communication terminal 220 itself (S236). On this occasion, the list creation unit 222 creates a list of remaining data obtained by removing at least one data that is not intended to be shared with the another communication terminal unless the another communication terminal particularly whishes so, from the data stored in the data storage unit 221. In this example, it is assumed that the list creation unit 222 has created a holding list that lists only the data A, B, C and D. The data provision unit 223 of the communication terminal 220 receives the aforementioned created holding list from the list creation unit 222, stores the holding list in the communication message, and sends the communication message to the another communication terminal 210 in the neighborhood (S237).

The data acquisition unit 214 of the communication terminal 210 receives the aforementioned communication message sent by the communication terminal 220. The data acquisition unit 214 inspects whether or not wished data E, that is stored in the wished data storage unit 215, is recorded in the holding list contained in the aforementioned communication message received (S217). In this example, the data E is not recorded in the holding list, and therefore the data acquisition unit 214 stores a wish list that lists the data E into a communication message, and sends the communication message to the communication terminal 220 (S218).

When the communication terminal 220 receives the communication message containing the aforementioned wish list, the communication terminal 220 performs re-creation of a holding list (S238). Specifically, first, the data provision unit 223 notifies the wish list stored in the received communication message to the list creation unit 222, and requests re-creation of a holding list. Next, the list creation unit 222 checks whether or not the data E mentioned in the wish list is stored in the data storage unit 221. In this example, the data E is stored in the data storage unit 221. Hence, the list creation unit 222 re-creates a holding list by adding the data E to the previously created holding list. As a result, the re-created holding list mentions the data A, B, C, D and E.

The data provision unit 223 of the communication terminal 220 stores the aforementioned re-created holding list into a communication message and sends the communication message to the communication terminal 210 (S239).

The data acquisition unit 214 of the communication terminal 210 receives the aforementioned communication message. The data acquisition unit 214 of the communication terminal 210 compares the holding list stored in the aforementioned communication message received and the list of data stored in the data storage unit 211 of the communication terminal 210 itself to determine data to be acquired from the communication terminal 220 (S219). In this step, the data acquisition unit 214 determines all the data that is not held by the communication terminal 210 itself, among the data recorded in the holding list, as data to be acquired. As a result, the data to be acquired is the data D and E. The data acquisition unit 214 sends to the communication terminal 220 a communication message that requests acquisition of the determined data D and E (S220).

When the data provision unit 223 of the communication terminal 220 receives a communication message related to the data request sent by the communication terminal 210, the data provision unit 223 reads the data D and E from the data storage unit 221 (S240). Then, the data provision unit 223 stores the read data into a communication message for reply, and sends the communication message to the communication terminal 210 (S241).

When the data acquisition unit 214 of the communication terminal 210 receives the aforementioned communication message sent by the communication terminal 220, the data acquisition unit 214 accumulates the data D and E contained in the communication message in the data storage unit 211 (S221).

Due to the foregoing operation, the data D and E held by the communication terminal 220 are accumulated in the data storage unit 211 of the communication terminal 210, so that the data D and E are newly shared between the communication terminals 210 and 220.

Thus, according to this exemplary embodiment, the data to be shared between communication terminals can be limited to a part of the data held by the communication terminals. A reason for this is as follows. That is, the holding list that a communication terminal notifies to another communication terminal in the neighborhood is a list of remaining data obtained by removing at least one piece of data that is not intended to be shared with the another communication terminal from all the data held by the communication terminal itself, unless the another communication terminal particularly wishes. Therefore, even if another communication terminal that has received the holding list requests a difference between the received holding list and the list of data held by the communication terminal itself, the communication terminal cannot acquire that data (the data not recorded in the holding list).

Furthermore, according to this exemplary embodiment, when another communication terminal wishes to acquire data not recorded in the holding list that is received from a communication terminal , the another communication terminal can notify a list of wished data. Due to this, if the communication terminal holds the wished data, the another communication terminal can acquire the wished data.

Furthermore, according to this exemplary embodiment, when another communication terminal wishes to acquire data not recorded in the holding list received from a communication terminal , the another communication terminal must notify a list of wished data. Therefore, the communication terminal can limit communication terminals that can acquire data not recorded in a holding list to specific communication terminals that recognize existence of wished data. In other words, the communication terminal can make the group of data that can be shared different, between a specific group of communication terminals that recognize the existence of such wished data and a group of other communication terminals that do not recognize the existence of such data.

Furthermore, according to this exemplary embodiment, the data, that is sent from the communication terminal to another communication terminal, among the whole data held by the communication terminal, is data that is to be shared between the communication terminals. Therefore, there is not a wasteful communication, that the data that is not scheduled to be shared between communication terminals is sent and received between the communication terminals.

### [Third Exemplary Embodiment]

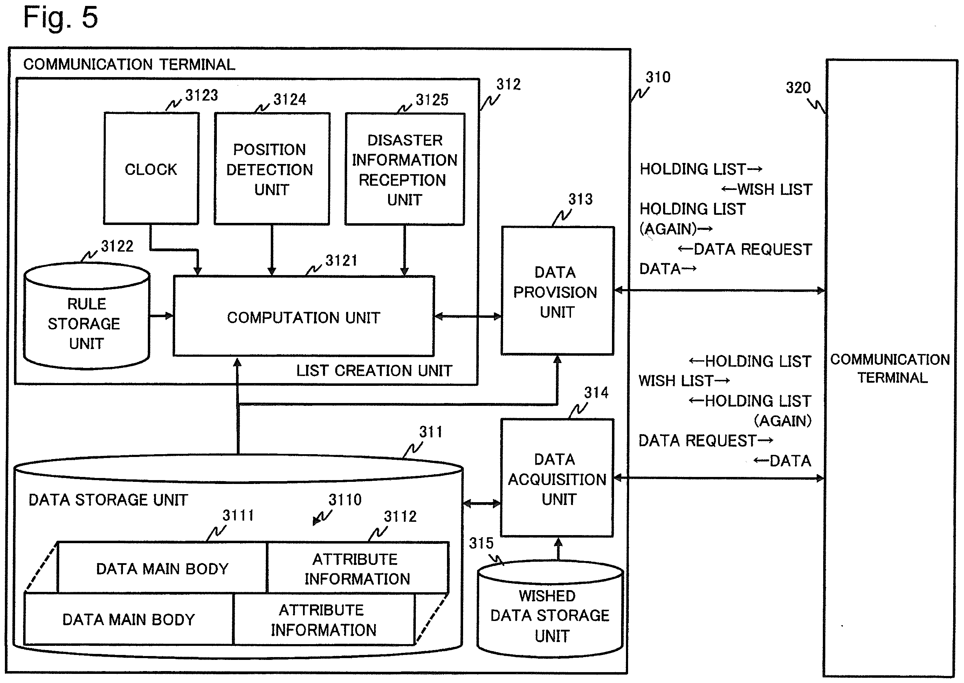

Referring to Fig. 5, a data sharing system in accordance with a third exemplary embodiment of the present invention has a communication terminal 310 and a communication terminal 320 that are capable of wirelessly communicating with each other. The communication terminals 310 and 320 may be both mobile communication terminals, and also, either one of them may be a mobile communication terminal. Furthermore, either one of the communication terminals may be a fixed communication terminal.

The communication terminal 310 includes a data storage unit 3 11, a list creation unit 312, a data provision unit 313, a data acquisition unit 314, and a wished data storage unit 315.

The data storage unit 311 has a function of storing one or more pieces of data 3110. Each piece of data 3110 is constructed of a data main body 3111 and attribute information 3112. The data main body 3111 may be text data, image data, voice data, or the like. The attribute information 3112 holds the value of the attribute (attribute value) that the data 3110 has.

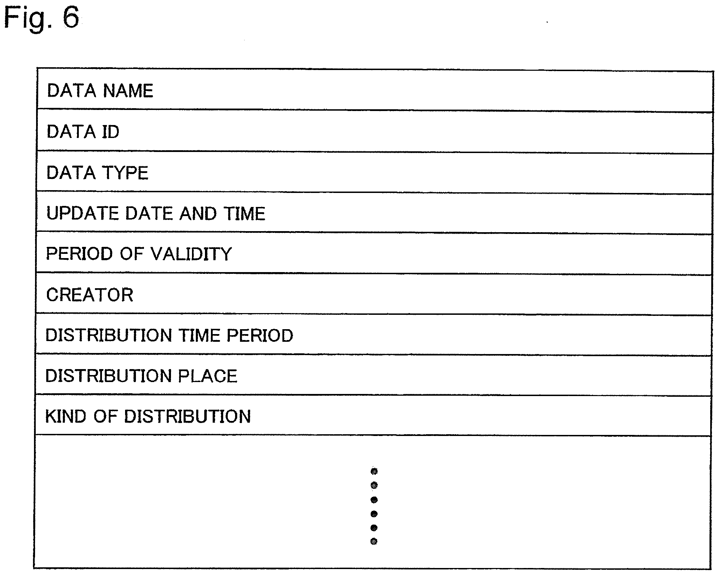

Fig. 6 illustrates an example of attributes that the data 3110 has. The data name is an attribute that indicates the name of the data 3110. The data ID is an attribute that indicates the identification number of the data 3110. The data type is an attribute that indicates the type (kind, such as text or image) of the data main body 3111. The update date and time is an attribute that indicates the date and time of the last update of the data 3110. The period of validity is an attribute that indicates the period of validity of the data 3110. The creator is an attribute that indicates a person who has created the data main body 3111. The distribution time period is an attribute that indicates the time period during which the data 3110 is permitted to be distributed (provided) to another communication terminal. The distribution place is an attribute that indicates the place where the data 3110 is permitted to be distributed (provided) to another communication terminal. The kind of distribution is an attribute that indicates the kind of distribution of the data 3110. The attributes indicated in Fig. 6 are an example. The data 3110 may be assigned with all the values of attributes indicated in Fig. 6, or the data 3110 may also be assigned with the values of a part of the attributes, or the data 3110 may also be assigned with the values of other attributes that are not illustrated in Fig. 6. Furthermore, one kind of attribute value regarding the same attribute may be assigned to the same data 3110, and also, a plurality of kinds of attribute values may be assigned to the same data 3110. Hereinafter, the kinds of attribute values will be described, by taking attributes that indicate the distribution place as an example.

The attribute values of attributes that indicate a place where the data 3110 is permitted to be distributed to another communication terminal are, for example, of the following two kinds.
(1) Region Name
(2) Position Coordinates

The "region name" identifies a place by a single name or a combination of plurality of names that each indicate a place, such as Tokyo Metropolis, Kagoshima Prefecture, Kanagawa Prefecture, Kawasaki City, B Shopping Area, or "a lane from intersection X of road A to intersection Y of road A". On the other hand, the "position coordinates" identify a place by latitude and longitude or latitude, longitude, and altitude. For example, when a point identified by latitude and longitude or further by altitude is termed "position coordinate point", when three or more position coordinate points are stated, an area surrounded by these position coordinate points is a place that is indicated by the attribute value. For example, in the case of three points are set, the inside of a triangle whose vertexes are the three points is the area mentioned above. Furthermore, when one position coordinate point and a distance R [m] from that point are stated, the interior of a circle drawn with a radius R from the one position coordinate point is a place that is indicated by the attribute value.

As for attribute values of attributes that indicate a distribution place assigned to certain data 3110, only a region name, or only position coordinates, or also both of region name and position coordinates, may be assigned.

The wished data storage unit 315 stores information that identifies data that the communication terminal itself particularly wishes to acquire. As the information that identifies data that is wished to be acquired, an attribute value that the data has is used. For example, when the own communication terminal wishes to acquire data of which the kind of distribution is set as SNS (Social Networking Service), the information representing (attribute = kind of distribution, and attribute value = SNS), or (kind of distribution = SNS) that is obtained by simplifying the former expression, is stored in the wished data storage unit 315.

The list creation unit 312, in terms of function, has substantially the same functions as the list creation unit 212 of the second exemplary embodiment. In this exemplary embodiment, a preferred internal construction of the list creation unit 312 is disclosed. Referring to Fig. 5, the list creation unit 312 includes a computation unit 3121, a rule storage unit 3122, a clock 3123, a position detection unit 3124, and a disaster information reception unit 3125.

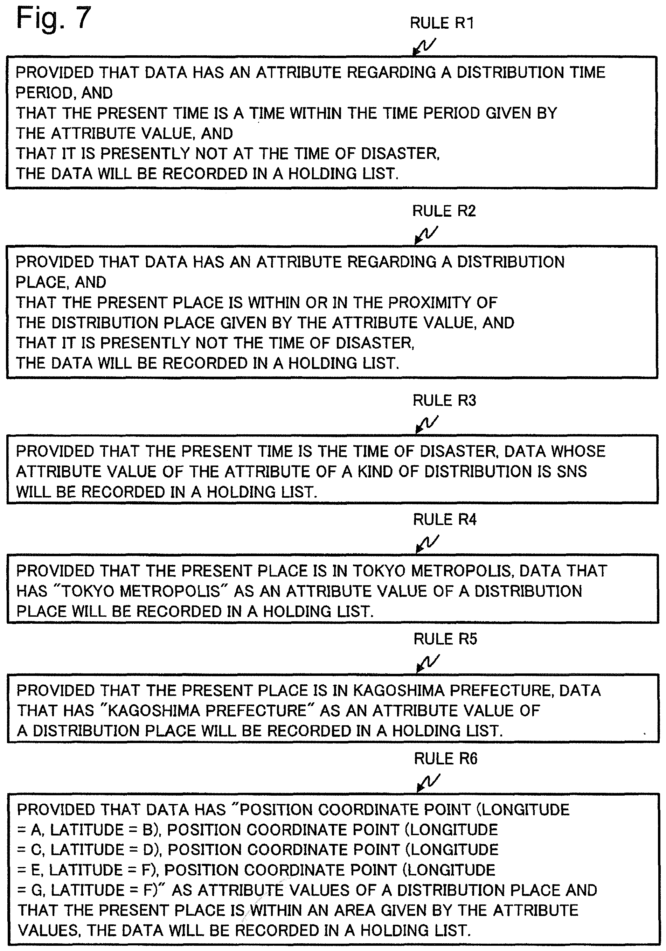

The rule storage unit 3122 stores one or more of rules regarding creation of a holding list. Fig. 7 indicates examples of rules stored in the rule storage unit 3122.

Rule R1 prescribes that, provided that the data 3110 has an attribute regarding a distribution time period, and that the present time is a time within the distribution time period given by the attribute value, and that it is presently not the time of disaster, the data 3110 will be recorded in the holding list.

Rule R2 prescribes that, provided that the data 3110 has an attribute of a distribution place, and that the present place is within or in the proximity of a distribution place given by the attribute value, and that it is presently not the time of disaster, the data 3110 will be recorded in the holding list.

Rule R3 prescribes that, provided that it is presently the time of disaster, data about which the attribute value of an attribute of a kind of distribution is SNS will be recorded in the holding list.

Rules R1 to R3 illustrated in Fig. 7 are examples. The list creation unit 312 may use all these three Rules R1 to R3, or may also use only one or more of the rules. Furthermore, the list creation unit 312 can also use other rules that are not illustrated in Fig. 7. The list creation unit 312 may use, for example, rules that specify attribute values of distribution time period, or, distribution place, that is set to data that needs to be recorded in the holding list, as indicated by Rules R4 to R6 in Fig. 7. In any case, the data 3110 that is not recorded in the holding list by any rule used, is data that is not intended to be shared with another communication terminal 320.

The clock 3123 is clocking means for detecting present time. The disaster information reception unit 3125 is a receiver that receives disaster information that is sent by broadcast waves or the like.

The position detection unit 3124 is means for detecting the place where the communication terminal 310 presently exists. For example, the position detection unit 3124 may include a GPS receiver. Due to having the GPS receiver, the position detection unit 3124 is able to detect position coordinates (longitude, latitude, and altitude) at which the communication terminal itself exists. Furthermore, the GPS receiver may be one that has a function of receiving error correction data for GPS signals from quasi-zenith satellites that stay in the sky and correcting positioning errors by using the error correction data. According to the GPS receiver that uses quasi-zenith satellites as described above, since high-precision positioning is possible, more specific region names or narrower areas can be designated as attribute values of place. Due to this, it becomes possible to provide data sharing such that attention calling information is delivered in the vicinity of an intersection, traffic information is delivered along the inbound and outbound lanes or Ways, or coupons are distributed in the vicinity of a shop. Furthermore, the position detection unit 3124 is able to utilize base station information of cellular phones, access point information of Wi-Fi, or the like, in acquisition of positional information.

Furthermore, the position detection unit 3124 may have a function of acquiring a name of a region where the communication terminal itself is located, for example, from a car navigation system. Furthermore, the position detection unit 3124 may have electronic map data and have a function of acquiring a region name that corresponds to the position coordinates of the terminal itself detected by the aforementioned GPS receiver from the aforementioned electronic map data.

The computation unit 3121 has a function of creating a list (holding list) that is recorded with information about remaining data obtained by removing at least one piece of data not intended to be shared with another communication terminal 320 from the data 3110 stored in the data storage unit 311, according to the rules stored in the rule storage unit 3122. Furthermore, the list creation unit 312 has a function of re-creating a holding list on the basis of the wish list passed from the data provision unit 313.

The data provision unit 313, the data acquisition unit 314, and the wish list storage unit 315 basically have substantially the same functions as the data provision unit 213, the data acquisition unit 214, and the wish list storage unit 215 in the second exemplary embodiment.

The communication terminal 320 has substantially the same functions as the communication terminal 310.

Next, operations that the communication terminals 310 and 320 share the data held by individual terminals with each other will be described by focusing on the communication terminal 310, in the data sharing system of this exemplary embodiment. The operations of the another communication terminal 320 are the same as those of the communication terminal 310.

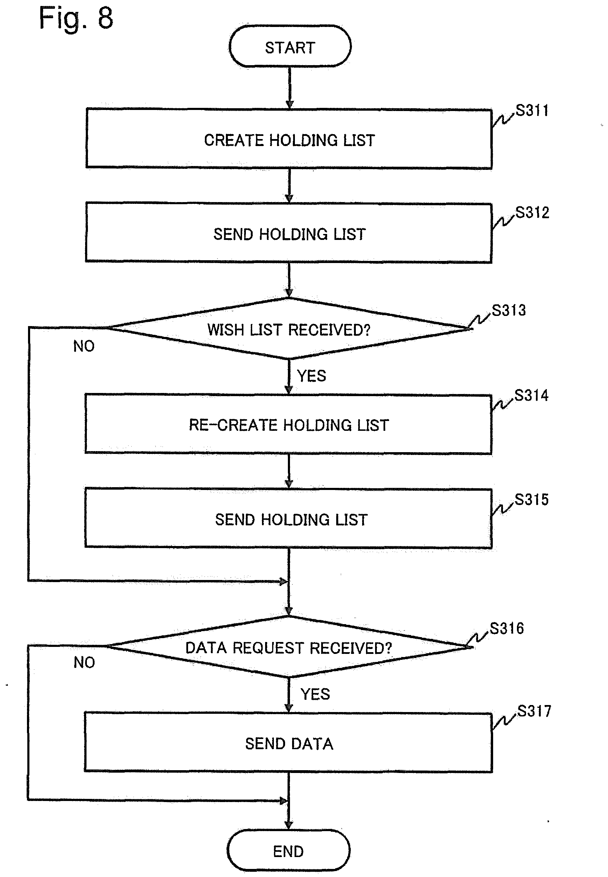

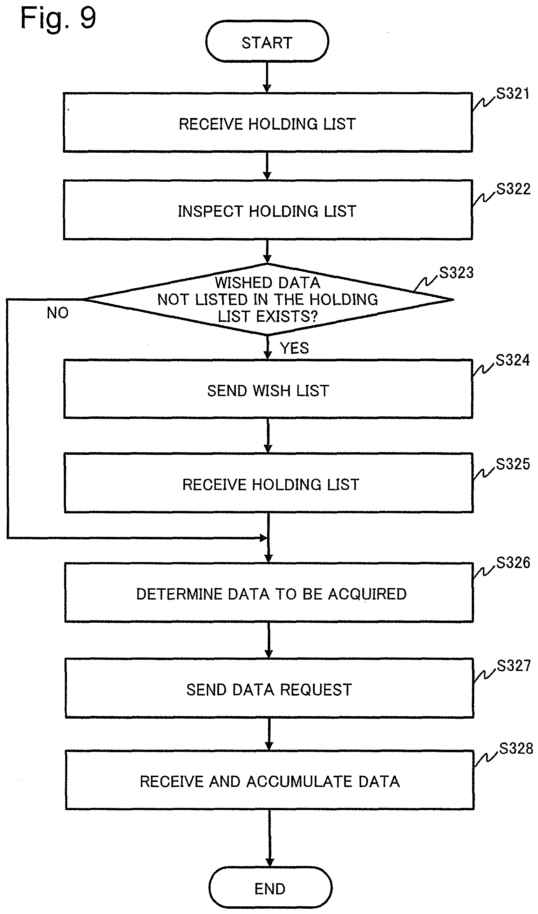

Fig. 8 is a flowchart illustrating an example of a process that the communication terminal 310 executes at a predetermined timing such as every constant period or every time new data is registered in the data storage unit 311. Fig. 9 is a flowchart illustrating an example of a process that the communication terminal 310 executes at the moment of receiving a holding list from the another communication terminal 320.

First, with reference to Fig. 8, a process that the communication terminal 310 executes at a predetermined timing, such as every constant period or every time new data is registered in the data storage unit 311, will be described.

Firstly, the list creation unit 312 of the communication terminal 310 creates a list (holding list) of data stored in the data storage unit 311 of the communication terminal itself 310 (S3 11). Details thereof will be described later. Next, the data provision unit 313 of the communication terminal 310 stores the aforementioned created holding list into a communication message and sends the holding list to the another communication terminal 320 in the neighborhood by wireless communication (S312).

After that, the data provision unit 313 of the communication terminal 310 waits for a reply to the aforementioned sent communication message having the holding list (S313). When the data provision unit 313 receives a communication message storing a wish list which the communication terminal 320 has sent as the reply to the aforementioned sent communication message of the holding list (YES at S313), the data provision unit 313 requests the list creation unit 312 to re-create a holding list. In response to this, the list creation unit 312 re-creates the holding list by taking the wish list into account (S314). Details of the re-creation of the holding list will be described later. Then, the data provision unit 313 stores the re-created holding list into a communication message and sends the communication message to the communication terminal 220 (S315).

The data provision unit 313, after sending the aforementioned re-created holding list, waits for an acquisition reply concerning the aforementioned sent communication message of the holding list (S316). Then, when the data provision unit 313 receives from the communication terminal 320 a communication message that requests acquisition of data (YES at S316), the data provision unit 313 reads the requested data from the data storage unit 311. Then, the data provision unit 313 stores the read data into a communication message for reply and sends the communication message to the communication terminal 320 (S317). Furthermore, when the data provision unit 313 receives a communication message that requests acquisition of data in response to the communication message of the holding list sent in step S312 (NO at S313 and YES at S316), the data provision unit 313 reads the requested data from the data storage unit 311. Then, the data provision unit 313 stores the read data into the communication message for reply and sends the communication message to the communication terminal 320 (S317).

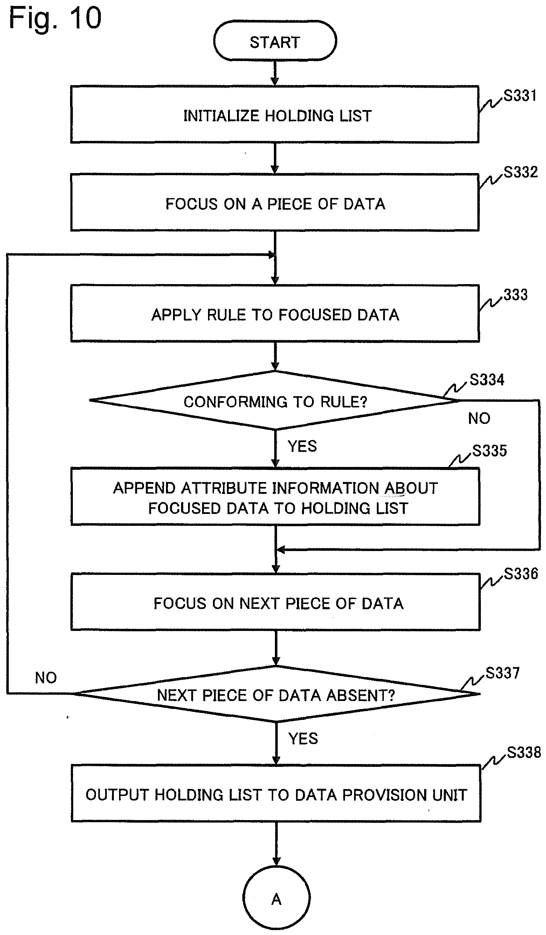

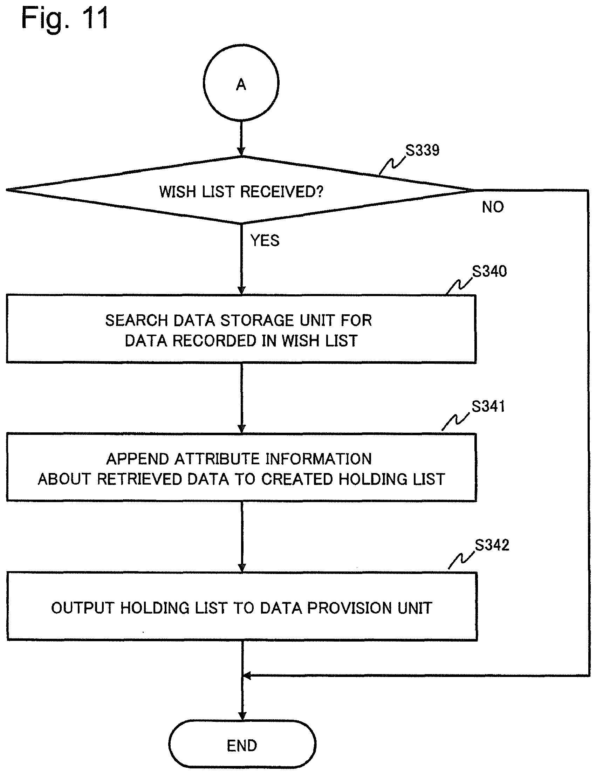

Fig. 10 and Fig. 11 are a flowchart illustrating an example of a process of the list creation unit 312. Hereinafter, with reference to Fig. 10 and Fig. 11, details of steps S311 and S314 in Fig. 8 will be described.

The computation unit 3121 of the list creation unit 312 first empties the holding list (S331). Next, the computation unit 3121 focuses on a leading one piece of data 3110 stored in the data storage unit 311 (S332). Next, the computation unit 3121 repeatedly applies the rules stored in the rule storage unit 3122 to the presently focused-on data 3110, until whichever of condition that the presently focused-on data 3110 is determined as conforming with the rule, or, condition that there is no longer a rule to be applied, is early established (S333).

For example, in the case of Rule R1 indicated in Fig. 7, the computation unit 3121 first checks whether or not the presently focused-on data 3110 has an attribute of a distribution time period in its attribute information 3112. If the presently focused-on data 3110 does not have such the attribute, the computation unit 3121 ends the process concerning Rule R1, and proceeds to a process concerning the next rule if a rule that has not yet been applied exists. Furthermore, if there is no rule that has not yet been applied, the computation unit 3121 concludes that presently focused-on data 3110 do not conform to rules, and ends the process of step S333. Furthermore, if the presently focused-on data 3110 has such the attribute, the computation unit 3121 checks whether or not the present time detected by the clock 3123 is within the time period given by an attribute value of the distribution time period stated in the attribute information 3112. Then, if the present time is not within the distribution time period, the computation unit 3121 ends the process concerning Rule R1. Then, if a rule that has not yet been applied exists, the computation unit 3121 proceeds to a process concerning the next rule. If there is no rule that has not yet been applied, the computation unit 3121 concludes that presently focused-on data 3110 do not conform to rules, and ends the process of step S333. If the present time is within the distribution time period, the computation unit 3121 checks whether or not disaster information has presently been received by the disaster information reception unit 3125. If disaster information has been received, the computation unit 3121 ends the process concerning Rule R1. Then, if a rule that has not yet been applied exists, the computation unit 3121 proceeds to a process concerning the next rule. If no rule that has not yet been applied exists, the computation unit 3121 concludes that presently focused-on data 3110 do not conform to rules, and ends the process of step S333. If disaster information has not been received, the computation unit 3121 concludes that presently focused-on data 3110 conform to the rule, and ends the process of step S333.

Furthermore, in the case of Rule R2 illustrated in Fig. 7, the computation unit 3121 first checks whether or not the presently focused-on data 3110 has an attribute of a distribution place in its attribute information 3112. If the presently focused-on data 3110 does not have such the attribute, the computation unit 3121 ends the process concerning Rule R2. Then, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If the presently focused-on data 3110 has such the attribute, the computation unit 3121 checks whether or not the present place detected by the position detection unit 3124 is within the distribution place stated in the attribute information 3112. If the present place is not within the distribution place, the computation unit 3121 ends the process concerning Rule R2. Then, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If the present place is within the distribution place, the computation unit 3121 checks whether or not disaster information has presently been received by the disaster information reception unit 3125. If disaster information has been received, the computation unit 3121 ends the process concerning Rule R2. Then, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If disaster information has not been received, the computation unit 3121 concludes that presently focused-on data 3110 conform to the rule and ends the process of step S333.

Furthermore, in the case of Rule R3 indicated in Fig. 7, the computation unit 3121 first checks whether or not disaster information has presently been received by the disaster information reception unit 3125. If disaster information has not been received, the computation unit 3121 ends the process concerning Rule R3. Then, if a rule that has not yet been applied exists, the computation unit 3121 proceeds to a process concerning the next rule. If no rule that has not yet been applied exists, the computation unit 3121 concludes inconformity and ends the process of step S333. If disaster information has been received, the computation unit 3121 checks whether or not the presently focused-on data 3110 have attribute values that (attribute = kind of distribution, and attribute value = SNS). Then, if the presently focused-on data 3110 does not have such attributes, the computation unit 3121 ends the process concerning Rule R3. Then, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If the presently focused-on data 3110 has such attribute values, the computation unit 3121 concludes that presently focused-on data 3110 conform to the rule and ends the process of step S333.

Furthermore, in the case of Rule R4 illustrated in Fig. 7, the computation unit 3121 first checks whether or not the present place detected by the position detection unit 3124 is in Tokyo Metropolis. If the present place is not in Tokyo Metropolis, the computation unit 3121 ends the process concerning Rule R4. Then, if a rule that has not yet been applied exists, the computation unit 3121 proceeds to a process concerning the next rule. If no rule that has not yet been applied exists, the computation unit 3121 concludes inconformity and ends the process of step S333. If the present place is in Tokyo Metropolis, the computation unit 3121 checks whether or not the presently focused-on data 3110 has "Tokyo Metropolis" as the attribute value of the distribution place. Then, if the presently focused-on data 3110 does not have such the attribute value, the computation unit 3121 ends the process concerning Rule R4. Thun, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If the presently focused-on data 3110 has such the attribute value, the computation unit 3121 concludes that presently focused-on data 3110 do not conform to the rule and ends the process of step S333.

Furthermore, in the case of Rule R5 indicated in Fig. 7, the computation unit 3121 performs processing in substantially the same manner as for the aforementioned Rule R4.

Furthermore, in the case of Rule R6 indicated in Fig. 7, the computation unit 3121 first checks whether or not the presently focused-on data 3110 has in its attribute information 3112 an attribute value based on position coordinates. If the presently focused-on data 3110 does not have such the attribute value, the computation unit 3121 ends the process concerning Rule R6. Then, if a rule that has not yet been applied exists, the computation unit 3121 proceeds to a process concerning the next rule. If no rule that has not yet been applied exists, the computation unit 3121 concludes ends the process concerning Rule R1 and ends the process of step S333. If the presently focused-on data 3110 has such a kind of attribute value, the computation unit 3121 checks whether or not the present place detected by the position detection unit 3124 is within an area identified by position coordinate values stated in the attribute information 3112. If the present place is not within the area, the computation unit 3121 ends the process concerning Rule R6. Then, if a rule that has not yet been applied exists, the computation unit 3121 proceeds to a process concerning the next rule. If no rule that has not yet been applied exists, the computation unit 3121 concludes that presently focused-on data 3110 do not conform to rules and ends the process of step S333. If the present place is within the area, the computation unit 3121 concludes that presently focused-on data 3110 conform to the rule and ends the process of step S333.

Next, if the result of application of the rules to the presently focused-on data 3110 represents conformity (YES at S334), the computation unit 3121 adds the attribute information 3112 of the presently focused-on data 3110 to the holding list as data that identifies the data 3110 (S335). Although here the computation unit 3121 records all the attribute information 3112 into the holding list, the computation unit 3121 may also records a part of the attribute information 3112, for example, predetermined attribute values such as data ID and update date and time and the like illustrated in Fig. 6. Then, the computation unit 3121 proceeds to the process of step S336. On the other hand, if the result of application of the rules to the presently focused-on data 3110 represents inconformity (NO at S334), the computation unit 3121 skips the process of step S335 and proceeds to the process of step S336.

In step S336, the computation unit 3121 shifts the focus to a next piece of data 3110 stored in the data storage unit 311. Then, if the next piece of data 3110 exists (NO at S337), the computation unit 3121 repeats substantially the same process as the previous process on the newly focused-on data 3110 (S333 to S335). Furthermore, if the next piece of data 3110 is absent (YES at S337), that is, if the process of steps S333 to S335 has been carried out on all the data 3110 stored in the data storage unit 311, the computation unit 3121 outputs the holding list of that time point to the data provision unit 313 (S338).

After that, when a wish list has been passed from the data provision unit 313 (YES at S339 in Fig. 11), the computation unit 3121 executes a process of re-creating a holding list (S340 to S342). In the re-creation of the holding list, the computation unit 3121 executes a process as follows.

First, the computation unit 3121 searches for wished-to-be-acquired data (wished data) recorded in the wish list from the data storage unit 311 (S340). For example, when the wish list is recorded with the attribute information 3112 about the wished-to-be-acquired data, the computation unit 3121 searches for data 3110 that has the attribute information 3112 that matches the attribute information 3112 recorded in the wish list. Next, the computation unit 3121 appends the attribute information 3112 of the successfully retrieved data 3110 to the holding list created in the process of steps S331 to S338 (S341). Then, the computation unit 3121 outputs the holding list that is recorded with appended information to the data provision unit 313 (S342).

Next, with reference to Fig. 9, a process that the communication terminal 310 executes, when receiving a holding list from another communication terminal 320, will be described.

When the data acquisition unit 314 of the communication terminal 310 receives a communication message that contains the holding list sent by the communication terminal 320 (S321), the data acquisition unit 314 inspects whether or not the wished data stored in the wished data storage unit 315 are listed in the holding list(S322). For example, when attribute information about data whose acquisition is wished is stored in the wished data storage unit 315, the data acquisition unit 314 investigates whether or not attribute information, that matches the stored attribute information, is recorded in the holding list.

As a result of the aforementioned inspection, if there exists wished-to-be-acquired data that is not listed in the holding list (YES at S323), the data acquisition unit 314 creates a wish list that lists the attribute information 3112 about the wished-to-be-acquired data not recorded in the holding list. Then, the data acquisition unit 314 stores the created wish list into a communication message, and sends the communication message to the communication terminal 320 (S324).
Then, the data acquisition unit 314 receives a communication message that contains a re-created holding list from the communication terminal 320 (S325), and proceeds to the process of step S326. On the other hand, as a result of the aforementioned inspection, if all the wished-to-be-acquired data is recorded in the first received holding list (NO at S323), the data acquisition unit 314 skips steps S324 and S325, and proceeds to the process of step S326.

Next, in step S326, the data acquisition unit 314 compares the holding list received from the communication terminal 320 and the list of data stored in the data storage unit 311 of the communication terminal itself 310, to determine data to be acquired from the communication terminal 310 (S326). For example, when the holding list is recorded with attribute information, the data acquisition unit 314 searches the data storage unit 311 for data 3110 that has attribute information 3112 that matches the attribute information recorded in the holding list. Then, the data acquisition unit 314 determines the attribute information, that the data acquisition unit 314 has failed to retrieve, as information that identifies data to be acquired from the communication terminal 310.

Next, the data acquisition unit 314 stores the information that identifies the data to be acquired from the communication terminal 320 into a communication message, and sends the communication message to the communication terminal 320 (S327). Then, when the data acquisition unit 314 receives from the communication terminal 320 a communication message that stores the data whose acquisition has been requested, as a reply to the aforementioned communication message, the data acquisition unit 314 extracts data from the communication message and accumulates the data in the data storage unit 311 (S328).

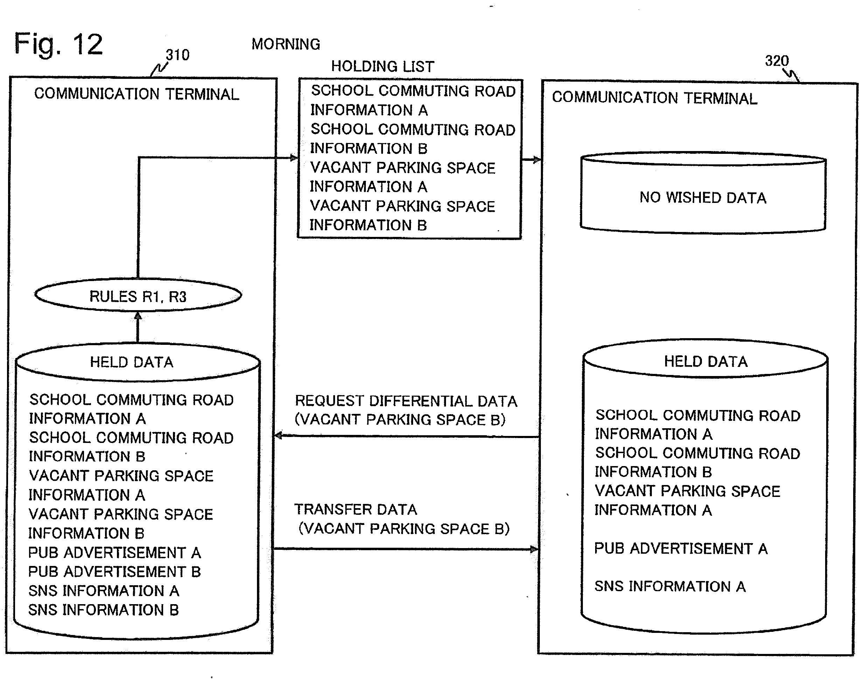

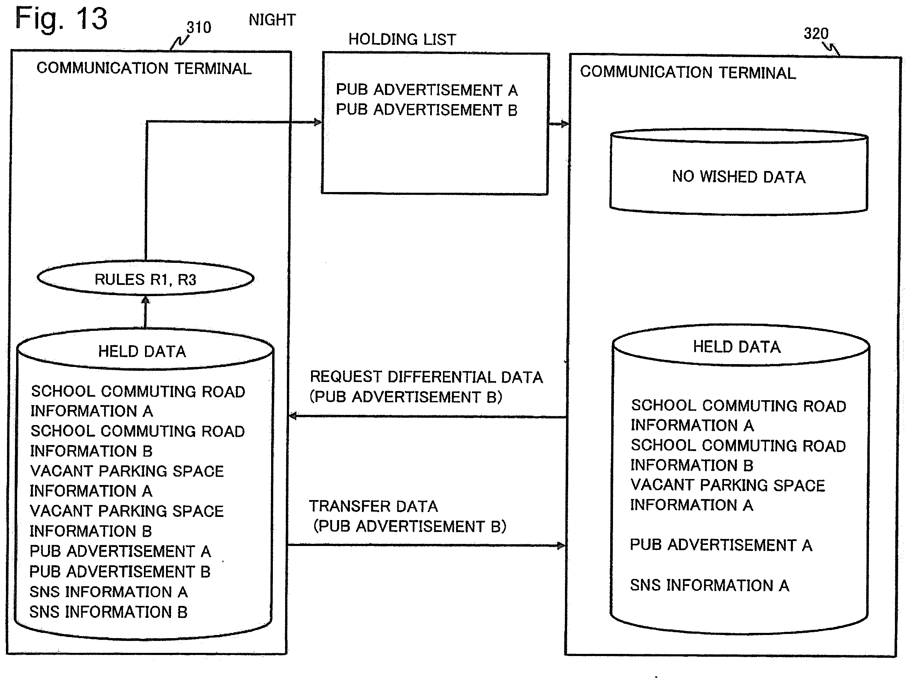

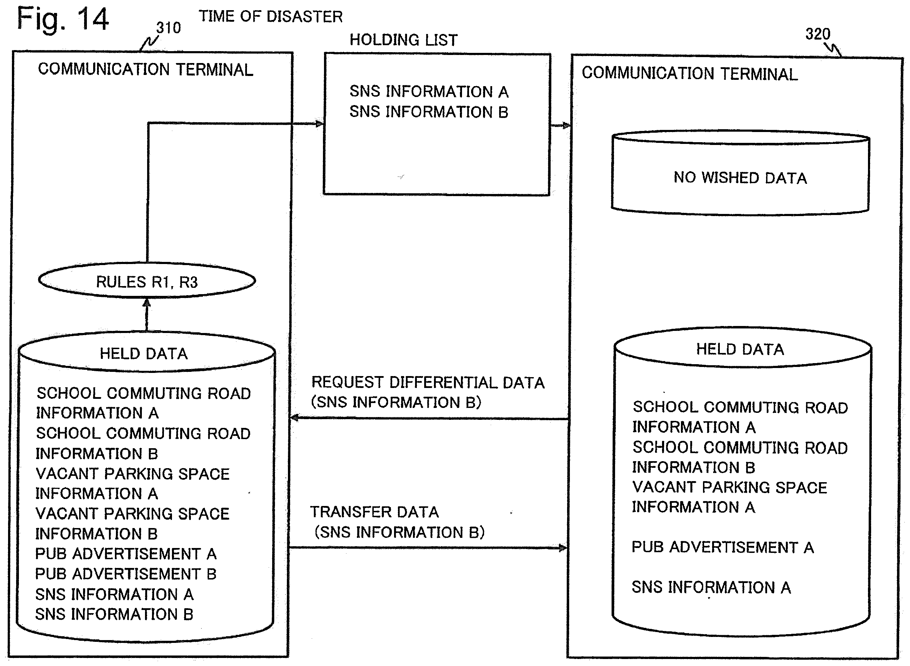

Fig. 12 to Fig. 14 are conceptual diagrams illustrating contents of the holding list notified from the communication terminal 310 to the communication terminal 320, when Rules R1 and R3 in Fig. 7 are used. Fig. 12 illustrates a case of a morning time period, Fig. 13 illustrates a case of a night time period, and Fig. 14 illustrates a case of the time of disaster.

As illustrated in Fig. 12, in the morning time period, the communication terminal 310 notifies a holding list that is recorded with only data such as school commuting road information A and B and vacant parking space information A and B having attribute values of the morning time period (not depicted in Fig. 12) regarding attributes of distribution time period, among all the information that the communication terminal 310 holds, to the communication terminal 320. Furthermore, in the night time period, as illustrated in Fig. 13, the communication terminal 310 notifies a holding list that is recorded with only data such as pub advertisement A and B having attribute values termed the night time period (not depicted in Fig. 13), among all the information that the communication terminal 310 holds, to the communication terminal 320. Furthermore, at the time of disaster, irrespective of time period, as illustrated in Fig. 14, the communication terminal 310 notifies a holding list that is recorded with only data termed SNS information A and B having attribute values termed SNS (not depicted in Fig. 14) regarding attributes of kind of distribution, among all the information that the communication terminal 310 holds, to the communication terminal 320. In any one of the above cases, the communication terminal 320 requests data that is recorded in the notified holding list and that the communication terminal itself does not hold as differential data, from the communication terminal 310. Then, the communication terminal 310 transfers the requested data to the communication terminal 320.

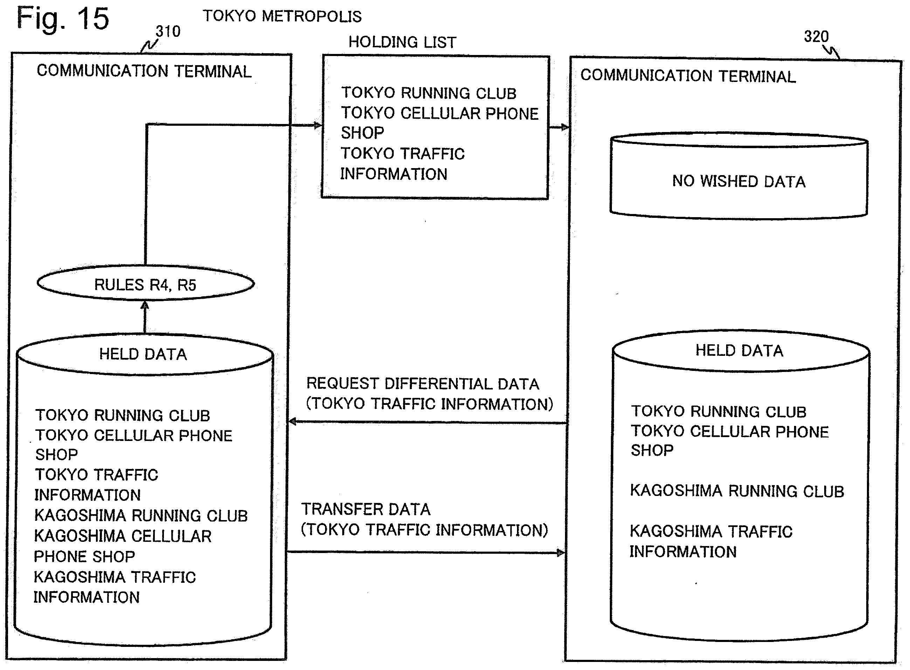

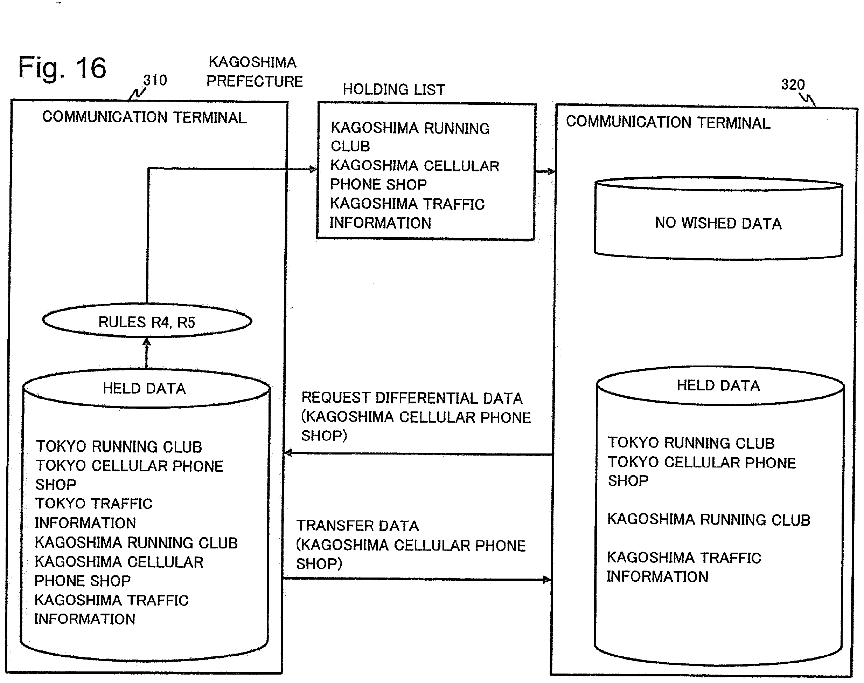

Fig. 15 and Fig. 16 are conceptual diagrams illustrating contents of a holding list notified from the communication terminal 310 to the communication terminal 320 when Rules R4 and R5 in Fig. 7 are used. Fig. 15 illustrates a case where the place is Tokyo Metropolis, and Fig. 16 a case where the place is Kagoshima Prefecture.

As illustrated in Fig. 15, when the place is Tokyo Metropolis, the communication terminal 310 notifies a holding list that is recorded with only data termed Tokyo running club, Tokyo cellular phone shop, and Tokyo traffic information that respectively have attribute values termed Tokyo Metropolis (not depicted in Fig. 15) regarding attributes of distribution place, among all the information that the communication terminal 310 holds, to the communication terminal 320. Furthermore, when the place is Kagoshima Prefecture, as illustrated in Fig. 16, the communication terminal 310 notifies a holding list that is recorded with only data termed Kagoshima running club, Kagoshima cellular phone shop, and Kagoshima traffic information that respectively have attribute values termed Kagoshima Prefecture (not depicted in Fig. 16) regarding attributes of distribution place, , among all the information that the communication terminal 310 holds, to the communication terminal 320. In any one of the cases, the communication terminal 320 requests the communication terminal 310 for data that is recorded in the notified holding list and that the communication terminal itself does not hold as differential data. Then, the communication terminal 310 transfers the requested data to the communication terminal 320.

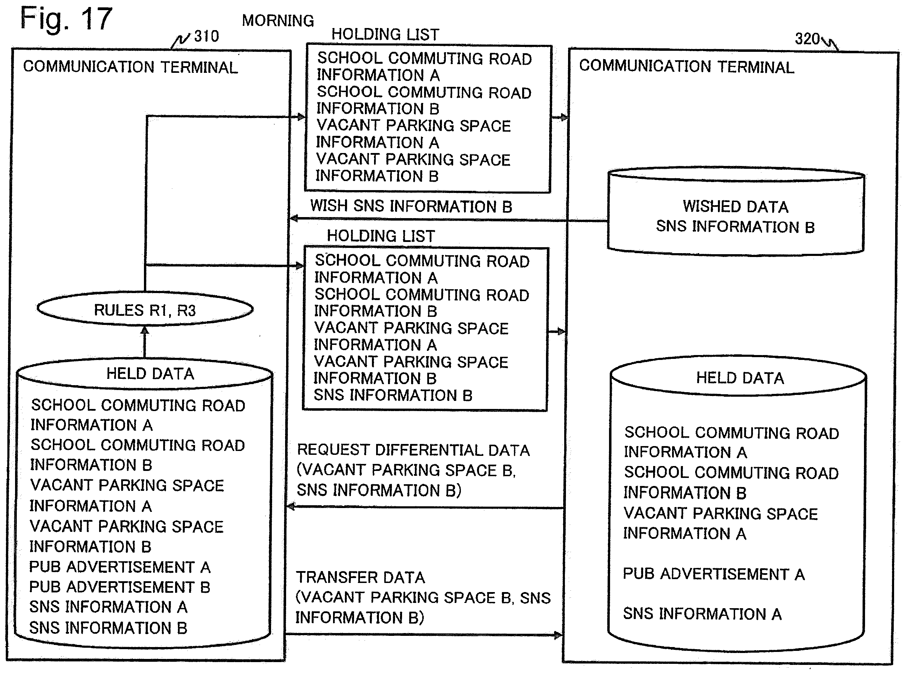

Fig. 17 illustrates a case where the communication terminal 320 has determined SNS information B as being wished-to-be-acquired data, in substantially the same case as in Fig. 12. Because wished-to-be-acquired data is not contained in the holding list that is notified first from the communication terminal 310, the communication terminal 320 notifies attribute information that identifies SNS information B to the communication terminal 310. In response to that, the communication terminal 310 creates a new holding list that lists SNS information B, and sends the new holding list to the communication terminal 320. After that, the communication terminal 320 requests data that is recorded in the notified holding list and that the communication terminal itself does not hold as differential data from the communication terminal 310. The communication terminal 310 transfers the requested data to the communication terminal 320.

Thus, according to this exemplary embodiment, substantially the same advantageous effects as in the second exemplary embodiment can be obtained, and advantageous effects as follows can be obtained.

The list creation unit 312 of each communication terminal has the rule storage unit 3122 that stores one or more rules, and the computation unit 3121 that creates a holding list to be notified to another communication terminal, according to the aforementioned rules. Therefore, by changing the rule, the list creation unit 312 can create different holding lists from the same held data group, and can easily change the management rules for the data sharing system, in other words, the sharing policy.

Furthermore, the data 3110 stored in the data storage unit 3 11 is constructed of the data main body 3111 and attribute information 3112, and the computation unit 3121 creates a holding list by referring to the attribute information 3112. Therefore, by changing the attribute information of data, the list creation unit 312 can create different holding lists from the same held data main body 3111 and rules. Due to this, the list creation unit 312 can easily change the sharing policy of the data sharing system.

Furthermore, by using attributes regarding the time period for providing data to another communication terminal as the attribute information 3112 of the data 3110, and using a rule that determines whether information is to be recorded or not to be recorded in the holding list according to the attribute value, the list creation unit 312 can create a holding list whose contents are depending on the time period. As a result, the list creation unit 312 is able to dynamically change the sharing policy of the data sharing system according to the time period.

Furthermore, by using an attribute regarding the place to provide data for another communication terminal as the attribute information 3112 of the data 3110, and using a rule that determines whether information is to be recorded or not to be recorded in the holding list according to the attribute values, the list creation unit 312 can create a holding list whose contents are depending on the place. As a result, the list creation unit 312 is able to dynamically change the sharing policy of the data sharing system according to the movement place of the communication terminal.

Furthermore, by using attributes regarding the kind of distribution as the attribute information 3112 about the data 3110, and using rules that determine whether information is to be recorded or not to be recorded in a holding list according to the attribute values, the list creation unit 312 can group all the data that the communication terminal holds depending on the presence or absence of attributes of the kind of distribution or depending on each of the attribute values. Then, the list creation unit 312 can determine whether information is to be recorded or not to be recorded in a holding list in units of the groups.

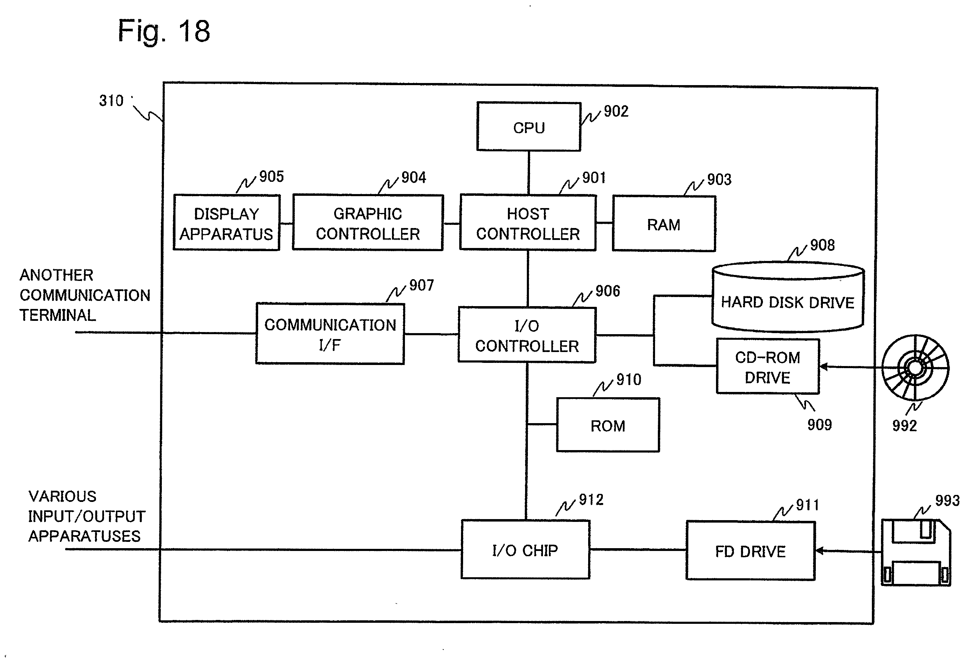

Fig. 18 illustrates an example of a hardware construction when a communication terminal 310 is constructed of an electronic information processing apparatus such as a computer. The communication terminal 310 includes a CPU (Central Processing Unit) peripheral unit, an input/output unit, and a legacy input/output unit. The CPU peripheral unit has a CPU 902, a RAM (Random Access Memory) 903, a graphic controller 904, and a display apparatus 905 that are connected with each other by a host controller 901. The input/output unit has a communication interface 907, a hard disk drive 908, and a CD-ROM (Compact Disk Read Only Memory) drive 909 that are connected to the host controller 901 by an input/output controller 906. The legacy input/output unit has a ROM (Read Only Memory) 910, a flexible disk drive 911, and an input/output chip 912 that are connected to the input/output controller 906.

The host controller 901 connects the RAM 903, the CPU 902 that accesses the RAM 903 at a high transfer rate, and the graphic controller 904. The CPU 902 operates to control various units on the basis of programs stored in the ROM 910 and the RAM 903. The graphic controller 904 acquires image data generated by the CPU 902 or the like in a frame buffer provided in the RAM 903, and displays the image data on the display apparatus 905. Instead of this, the graphic controller 904 may contain therein a frame buffer that stores image data generated by the CPU 902 or the like.

The input/output controller 906 connects the host controller 901, the hard disk drive 908, which is a relatively high-speed input/output apparatus, the communication interface 907, and the CD-ROM drive 909. The hard disk drive 908 stores programs and data that the CPU 902 uses. The communication interface 907 connects to another communication terminal 320 so as to send and receive programs or data. The communication method is arbitrary. For example, Wi-Fi Direct may be used as the communication method. The CD-ROM drive 909 reads programs or data from a CD-ROM 992, and provides the programs or data to the hard disk drive 908 and the communication interface 907 via the RAM 903.

The input/output controller 906 is connected with the ROM 910 and with relatively low-speed input/output apparatuses that are the flexible disk drive 911 and the input/output chip 912. The ROM 910 stores a boot program that the communication terminal 310 executes at the time of starting, programs depending on the hardware of the communication terminal 310, or the like. The flexible disk drive 911 reads programs or data from a flexible disk 993, and provides the programs or data to the hard disk drive 908 and the communication interface 907 via the RAM 903. The input/output chip 912 connects to the flexible disk drive 911, or various input/output apparatuses via a parallel port, a serial port, a keyboard port, a mouse port, or the like.

The programs that the CPU 902 executes are stored in a recording medium such as the flexible disk 993, the CD-ROM 992, or an IC (Integrated Circuit) card, and are provided by a user. The programs stored in such recording media may be compressed or non-compressed. The programs are installed from the recording media into the hard disk drive 908, and are read out into the RAM 903, and executed by the CPU 902. The programs executed by the CPU 902 cause the communication terminal 310 to function as the data storage unit 311, the list creation unit 312, the data provision unit 313, the data acquisition unit 314, and wish list storage unit 315 described in connection with Fig. 5 to Fig. 17.

The programs indicated above may be stored in an external storage medium. As a storage medium, it is possible to use, besides the flexible disk 993 and the CD-ROM 992, an optical recording medium, such as a DVD (Digital Versatile Disk) or a PD (Phase Disk), magneto-optical recording medium, such as an MD (MiniDisk), a tape medium, a semiconductor memory such as an IC card, or the like. Furthermore, by using as a recording medium a storage medium, such as a hard disk or a RAM, that is provided in a server system connected to a dedicated communication network or the Internet, the information sharing system may be provided as a program via a network.

### [Other Exemplary Embodiments]

While the present invention has been described above with reference to various exemplary embodiments, the present invention is not limited only to the foregoing exemplary embodiments, but can be subjected to various addition and changes. For example, in the aforementioned second and third exemplary embodiments, another communication terminal that has received a holding list from a communication terminal, if the holding list does not list a wished-to-be-acquired data, may append wish list to a holding list that the another communication terminal sends to the neighborhood, and may send the modified holding list. Furthermore, in the aforementioned second and third exemplary embodiments, when the communication terminal receives a wish list from the another communication terminal, the communication terminal re-creates and sends a holding list. However, the communication terminal may omit re-creating and sending of a holding list. And when acquisition of differential data is requested from the another communication terminal, the communication terminal may send the differential data, and the data that the communication terminal itself holds, among the data recorded in the wish list, to the another communication terminal.

### [Industrial Applicability]

The present invention is applicable to a data sharing system in which the sharing of data, such as various contents, in an ad hoc network or a network other than the ad hoc network, is performed between communication terminals mounted in vehicles, such as motor vehicles, or between portable communication terminals.

### [Reference signs List]

- 110, 120...: Communication terminal
- 111, 121...: Data storage unit
- 113, 123...: Data provision unit
- 114, 124...: Data acquisition unit

## Claims

1. A data sharing system in which data is shared between a plurality of communication terminals (110, 120; 210, 220) capable of wirelessly transmitting and receiving a communication message to and from each other,
each of the communication terminals (110, 120; 210, 220) comprising:
a data storage unit (111, 121; 211, 221) that stores at least one piece of data;
a holding list creation unit (212, 222) that creates a holding list that is recorded with information about remaining data obtained by removing at least one piece of data that is not intended to be shared with another communication terminal (110, 120; 210, 220) from data stored in the data storage unit (111, 121; 211, 221);
a data provision unit (113, 123; 213, 223) that sends the created holding list to the another communication terminal (110, 120; 210, 220) by using the communication message, and reads the data requested from the another communication terminal (110, 120; 210, 220) by the communication message from the data storage unit (111, 121; 211, 221) and sends the requested data to the another communication terminal (110, 120; 210, 220) by the communication message; and
a data acquisition unit (114, 124; 214, 224) that determines data not stored in the data storage unit (111, 121; 211, 221), among data in the holding list received from the another communication terminal (110, 120; 210, 220) by the communication message, and requests the another communication terminal (110, 120; 210, 220) for the determined data by the communication message,
wherein
each of the communication terminals (110, 120; 210, 220) comprises
a wished data storage unit (215, 315) that stores information about data whose acquisition is wished, wherein
the data acquisition unit (114, 124; 214, 224) determines whether or not the information about the data whose acquisition is wished is recorded in the holding list received from the another communication terminal (110, 120; 210, 220), and, if the information is recorded, requests the another communication terminal (110, 120; 210, 220) for the determined data, and, if the information is not recorded, sends a wish list that is recorded with the information about the data whose acquisition is wished to the another communication terminal (110, 120; 210, 220) by the communication message, and determines data not stored in the data storage unit (111, 121; 211, 221), among the data in the re-created holding list that is received from the another communication terminal (110, 120; 210, 220) by the communication message after the wish list has been sent to the another communication terminal (110, 120; 210, 220), and requests the another communication terminal (110, 120; 210, 220) for the determined data by the communication message, and wherein
when having sent the holding list to the another communication terminal (110, 120; 210, 220) by the communication message, if the data provision unit (113, 123; 213, 223) receives the wish list from the another communication terminal (110, 120; 210, 220) by the communication message, as a reply to the communication message, the data provision unit (113, 123; 213, 223) notifies the received wish list to the holding list creation unit (212, 222), and sends the holding list re-created by the holding list creation unit (212, 222) to the another communication terminal (110, 120; 210, 220) by the communication message, and wherein
the holding list creation unit (212, 222) adds information about the data stored in the data storage unit (111, 121; 211, 221), among the data in the wish list notified from the data provision unit (113, 123; 213, 223), to the created holding list and thereby re-creates the holding list.

2. The data sharing system according to Claim 1, wherein
the holding list creation unit (212, 222) comprises
a rule storage unit (3122) that stores one or more rules, and
a computation unit (3121) that creates the holding list according to the rule.

3. The data sharing system according to Claim 2, wherein
the data stored in the data storage unit (111, 121; 211, 221) is constructed of a data main body and attribute information, and
the computation unit (3121) creates the holding list by referring to the attribute information.

4. The data sharing system according to Claim 3, wherein
the one or more rules include at least one of a rule that specifies the attribute information that data recorded in the holding list needs to have, and a rule that specifies the attribute information that data not recorded in the holding list needs to have.

5. The data sharing system according to Claim 3 or 4, wherein
the attribute information about the data includes at least one of an attribute regarding a time period when the data is provided to the another communication terminal (110, 120; 210, 220), an attribute regarding a place where the data is provided to another of the communication terminal (110, 120; 210, 220), and an attribute regarding a kind of distribution of the data.

6. The data sharing system according to Claim 5, wherein
a region name is used as an attribute value of the attribute regarding the place.

7. The data sharing system according to Claim 5, wherein
a position coordinate is used as an attribute value of the attribute regarding the place.

8. A communication terminal (110, 120; 210, 220) capable of wirelessly transmitting and receiving a communication message to and from another communication terminal (110, 120; 210, 220), the communication terminal (110, 120; 210, 220) comprising:
a data storage unit (111, 121; 211, 221) that stores at least one piece of data;
a holding list creation unit (212, 222) that creates a holding list that is recorded with information about remaining data obtained by removing at least one piece of data that is not intended to be shared with another communication terminal (110, 120; 210, 220) from data stored in the data storage unit (111, 121; 211, 221);
a data provision unit (113, 123; 213, 223) that sends the created holding list to the another communication terminal (110, 120; 210, 220) by using the communication message, and reads the data requested from the another communication terminal (110, 120; 210, 220) by the communication message from the data storage unit (111, 121; 211, 221) and sends the requested data to the another communication terminal (110, 120; 210, 220) by the communication message;
a data acquisition unit (114, 124; 214, 224) that determines data not stored in the data storage unit (111, 121; 211, 221), among data in the holding list received from the another communication terminal (110, 120; 210, 220) by the communication message, and requests the another communication terminal (110, 120; 210, 220) for the determined data by the communication message; and
a wished data storage unit (215, 315) that stores information about data whose acquisition is wished, wherein
the data acquisition unit (114, 124; 214, 224) determines whether or not the information about the data whose acquisition is wished is recorded in the holding list received from the another communication terminal (110, 120; 210, 220), and, if the information is recorded, requests the another communication terminal (110, 120; 210, 220) for the determined data, and, if the information is not recorded, sends a wish list that is recorded with the information about the data whose acquisition is wished to the another communication terminal (110, 120; 210, 220) by the communication message, and determines data not stored in the data storage unit (111, 121; 211, 221), among the data in the re-created holding list that is received from the another communication terminal (110, 120; 210, 220) by the communication message after the wish list has been sent to the another communication terminal (110, 120; 210, 220), and requests the another communication terminal (110, 120; 210, 220) for the determined data by the communication message, and wherein
when having sent the holding list to the another communication terminal (110, 120; 210, 220) by the communication message, if the data provision unit (113, 123; 213, 223) receives the wish list from the another communication terminal (110, 120; 210, 220) by the communication message, as a reply to the communication message, the data provision unit (113, 123; 213, 223) notifies the received wish list to the holding list creation unit (212, 222), and sends the holding list re-created by the holding list creation unit (212, 222) to the another communication terminal (110, 120; 210, 220) by the communication message, and wherein
the holding list creation unit (212, 222) adds information about the data stored in the data storage unit (111, 121; 211, 221), among the data in the wish list notified from the data provision unit (113, 123; 213, 223), to the created holding list and thereby re-creates the holding list.

9. The communication terminal (110, 120; 210, 220) according to Claim 8, wherein
the holding list creation unit (212, 222) comprises
a rule storage unit (3122) that stores one or more rules, and
a computation unit (3121) that creates the holding list according to the rule.

10. The communication terminal (110, 120; 210, 220) according to Claim 9, wherein
the data stored in the data storage unit (111, 121; 211, 221) is constructed of a data main body and attribute information, and
the computation unit (3121) creates the holding list by referring to the attribute information.

11. The communication terminal (110, 120; 210, 220) according to Claim 10, wherein
the one or more rules include at least one of a rule that specifies the attribute information that data recorded in the holding list needs to have, and a rule that specifies the attribute information that data not recorded in the holding list needs to have.

12. The communication terminal (110, 120; 210, 220) according to Claim 10 or 11, wherein
the attribute information about the data includes at least one of an attribute regarding a time period when the data is provided to the another communication terminal (110, 120; 210, 220), an attribute regarding a place where the data is provided to another of the communication terminal (110, 120; 210, 220), and an attribute regarding a kind of distribution of the data.

13. The communication terminal (110, 120; 210, 220) according to Claim 12, wherein
a region name is used as an attribute value of the attribute regarding the place.

14. The communication terminal (110, 120; 210, 220) according to Claim 12, wherein
a position coordinate is used as an attribute value of the attribute regarding the place.

15. A data sharing method in which data is shared between a first communication terminal (110, 120; 210, 220) and a second communication terminal (110, 120; 210, 220) that are capable of wirelessly transmitting and receiving a communication message to and from each other, the data sharing method comprising
a first step in which the first communication terminal (110, 120; 210, 220) creates a holding list that is recorded with information about remaining data obtained by removing at least one piece of data that is not intended to be shared with the second communication terminal (110, 120; 210, 220) from data held by the communication terminal (110, 120; 210, 220) itself, and sends the holding list to the second communication terminal (110, 120; 210, 220) by the communication message,
a second step in which the second communication terminal (110, 120; 210, 220) determines data that the communication terminal (110, 120; 210, 220) itself does not hold, among data in the holding list received from the first communication terminal (110, 120; 210, 220) by the communication message, and requests the first communication terminal (110, 120; 210, 220) for the determined data by the communication message, and
a third step in which the first communication terminal (110, 120; 210, 220) sends the data requested from the second communication terminal (110, 120; 210, 220) by the communication message to the second communication terminal (110, 120; 210, 220) by the communication message,
wherein
the second communication terminal (110, 120; 210, 220) comprises a wished data storage unit (215, 315) that stores information about data whose acquisition is wished, and wherein
in the second step, the second communication terminal (110, 120; 210, 220) determines whether or not the data whose acquisition is wished is recorded in the holding list received from the first communication terminal (110, 120; 210, 220) by the communication message, and,
in case where the data is recorded, determines data that the communication terminal (110, 120; 210, 220) itself does not hold, among data in the holding list received, and,
in case where the data is not recorded, sends a wish list that is recorded with information about the data whose acquisition is wished to the first communication terminal (110, 120; 210, 220) by the communication message, and determines data not stored in the data storage unit (111, 121; 211, 221), among the data in the re-created holding list that is received from the first communication terminal (110, 120; 210, 220) by the communication message after the wish list has been sent to the first communication terminal (110, 120; 210, 220),
and requests the first communication terminal (110, 120; 210, 220) for the data determined in either one of the cases by the communication message.

16. A data sharing method in which a communication terminal (110, 120; 210, 220), which includes a data storage unit (111, 121; 211, 221) that stores at least one piece of data, and which is capable of wirelessly transmitting and receiving a communication message to and from another communication terminal (110, 120; 210, 220), shares data with the another communication terminal (110, 120; 210, 220), the data sharing method comprising:
a first step of creating a holding list that is recorded with information about remaining data obtained by removing at least one piece of data that is not intended to be shared with the another communication terminal (110, 120; 210, 220) from data stored in the data storage unit (111, 121; 211, 221), and sending the holding list to the another communication terminal (110, 120; 210, 220) by the communication message;
a second step of receiving from the another communication terminal (110, 120; 210, 220) the communication message that requests data in the holding list sent, and reading the data requested by the communication message from the data storage unit (111, 121; 211, 221) and sends the requested data to the another communication terminal (110, 120; 210, 220) by the communication message; and
a third step of, if a wish list that is recorded with information about data not contained in the holding list sent is received from the another communication terminal (110, 120; 210, 220), adding information about the data stored in the data storage unit (111, 121; 211, 221), among the data in the wish list received, to the created holding list and thereby re-creating the holding list, and sending the holding list to the another communication terminal (110, 120; 210, 220) by the communication message.

17. A program that causes a computer that constitutes a communication terminal (110, 120; 210, 220) capable of wirelessly transmitting and receiving a communication message to and from another communication terminal (110, 120; 210, 220) to function as:
a data storage unit (111, 121; 211, 221) that stores at least one piece of data;
a holding list creation unit (212, 222) that creates a holding list that is recorded with information about remaining data obtained by removing at least one piece of data that is not intended to be shared with another communication terminal (110, 120; 210, 220) from data stored in the data storage unit (111, 121; 211, 221);
a data provision unit (113, 123; 213, 223) that sends the created holding list to the another communication terminal (110, 120; 210, 220) by using the communication message, and reads the data requested from the another communication terminal (110, 120; 210, 220) by the communication message from the data storage unit (111, 121; 211, 221) and sends the requested data to the another communication terminal (110, 120; 210, 220) by the communication message;
a data acquisition unit (114, 124; 214, 224) that determines data not stored in the data storage unit (111, 121; 211, 221), among data in the holding list received from the another communication terminal (110, 120; 210, 220) by the communication message, and requests the another communication terminal (110, 120; 210, 220) for the determined data by the communication message; and
a wished data storage unit (215, 315) that stores information about data whose acquisition is wished, wherein
the data acquisition unit (114, 124; 214, 224) determines whether or not the data whose acquisition is wished is recorded in the holding list received from the another communication terminal (110, 120; 210, 220), and,
if the data is recorded, requests the another communication terminal (110, 120; 210, 220) for the determined data, and,
if the data is not recorded, sends a wish list that is recorded with information about the data whose acquisition is wished to the another communication terminal (110, 120; 210, 220) by the communication message, and determines data not stored in the data storage unit (111, 121; 211, 221), among the data in the re-created holding list that is received from the another communication terminal (110, 120; 210, 220) by the communication message after the wish list has been sent to the another communication terminal (110, 120; 210, 220), and requests the another communication terminal (110, 120; 210, 220) for the determined data by the communication message, and wherein
when having sent the holding list to the another communication terminal (110, 120; 210, 220) by the communication message, if the data provision unit (113, 123; 213, 223) receives the wish list from the another communication terminal (110, 120; 210, 220) by the communication message, as a reply to the communication message,, the data provision unit (113, 123; 213, 223) notifies the received wish list to the holding list creation unit (212, 222), and sends the holding list re-created by the holding list creation unit (212, 222) to the another communication terminal (110, 120; 210, 220) by the communication message, and wherein
the holding list creation unit (212, 222) adds information about the data stored in the data storage unit (111, 121; 211, 221), among the data in the wish list notified from the data provision unit (113, 123; 213, 223), to the created holding list and thereby re-creates the holding list.

## Patentansprüche

1. Datenaustauschsystem, in dem Daten zwischen mehreren Kommunikationsendgeräten (110, 120; 210, 220) ausgetauscht werden, die dazu geeignet sind, eine Kommunikationsnachricht drahtlos zueinander zu übertragen und voneinander zu empfangen,
wobei jedes der Kommunikationsendgeräte (110, 120; 210, 220) aufweist:
eine Datenspeichereinheit (111, 121; 211, 221), die mindestens ein Datenelement speichert;
eine Haltelistenerzeugungseinheit (212, 222), die eine Halteliste erzeugt, in der Information über übrige Daten gespeichert ist, die durch Entfernen mindestens eines Datenelements, das nicht mit einem anderen Kommunikationsendgerät (110, 120; 210, 220) ausgetauscht werden soll, von den in der Datenspeichereinheit (111, 121; 211, 221) gespeicherten Daten erhalten wird;
eine Datenbereitstellungseinheit (113, 123; 213, 223), die die erzeugte Halteliste unter Verwendung der Kommunikationsnachricht an das andere Kommunikationsendgerät (110, 120; 210, 220) überträgt und die vom anderen Kommunikationsendgerät (110, 120; 210, 220) durch die Kommunikationsnachricht angeforderten Daten von der Datenspeichereinheit (111, 121; 211, 221) ausliest und die angeforderten Daten durch die Kommunikationsnachricht an das andere Kommunikationsendgerät (110, 120; 210, 220) überträgt; und
eine Datenbeschaffungseinheit (114, 124; 214, 224), die Daten, die nicht in der Datenspeichereinheit (111, 121; 211, 221) gespeichert sind, unter Daten in der Halteliste bestimmt, die von dem anderen Kommunikationsendgerät (110, 120; 210, 220) durch die Kommunikationsnachricht empfangen wurden, und die bestimmten Daten durch die Kommunikationsnachricht von dem anderen Kommunikationsendgerät (110, 120; 210, 220) anfordert,
wobei jedes der Kommunikationsendgeräte (110, 120; 210, 220) aufweist:
eine Wunschdatenspeichereinheit (215, 315), die Information über Daten speichert, deren Beschaffung gewünscht ist, wobei
die Datenbeschaffungseinheit (114, 124; 214, 224) bestimmt, ob die Information über die Daten, deren Beschaffung gewünscht ist, in der vom anderen Kommunikationsendgerät (110, 120; 210, 220) empfangenen Halteliste aufgezeichnet ist oder nicht, und, wenn die Information aufgezeichnet ist, die bestimmten Daten vom anderen Kommunikationsendgerät (110, 120; 210, 220) anfordert, und, wenn die Information nicht aufgezeichnet ist, eine Wunschliste, in der die Information über die Daten aufgezeichnet ist, deren Beschaffung gewünscht ist, durch die Kommunikationsnachricht an das andere Kommunikationsendgerät (110, 120; 210, 220) überträgt, und Daten, die nicht in der Datenspeichereinheit (111, 121; 211, 221) gespeichert sind, unter den Daten in der wieder erzeugten Halteliste bestimmt, die vom anderen Kommunikationsendgerät (110, 120; 210, 220) durch die Kommunikationsnachricht empfangen wird, nachdem die Wunschliste an das andere Kommunikationsendgerät (110, 120; 210, 220) übertragen worden ist, und die bestimmten Daten durch die Kommunikationsnachricht vom anderen Kommunikationsendgerät (110, 120; 210, 220) anfordert, und
wobei, nachdem die Halteliste durch die Kommunikationsnachricht an das andere Kommunikationsendgerät (110, 120; 210, 220) übertragen worden ist, wenn die Datenbereitstellungseinheit (113, 123; 213, 223) die Wunschliste vom anderen Kommunikationsendgerät (110, 120; 210, 220) durch die Kommunikationsnachricht als Antwort auf die Kommunikationsnachricht empfängt, die Datenbereitstellungseinheit (113, 123; 213, 223) die empfangene Wunschliste an die Haltelistenerzeugungseinheit (212, 222) übermittelt und die durch die Haltelistenerzeugungseinheit (212, 222) wieder erzeugte Halteliste durch die Kommunikationsnachricht an das andere Kommunikationsendgerät (110, 120; 210, 220) überträgt, und
wobei die Haltelistenerzeugungseinheit (212, 222) Information über die in der Datenspeichereinheit (111, 121; 211, 221) gespeicherten Daten unter den Daten in der von der Datenbereitstellungseinheit (113, 123; 213, 223) übermittelten Wunschliste zur erzeugten Halteliste hinzufügt und dadurch die Halteliste wieder erzeugt.

2. System nach Anspruch 1, wobei
die Haltelistenerzeugungseinheit (212, 222) aufweist:
eine Vorschriftenspeichereinheit (3122), die eine oder mehrere Vorschriften speichert, und
eine Recheneinheit (3121), die die Halteliste gemäß der Vorschrift erzeugt.

3. System nach Anspruch 2, wobei
die in der Datenspeichereinheit (111, 121; 211, 221) gespeicherten Daten aus einem Datenhauptkörper und Attributinformation aufgebaut sind, und
die Recheneinheit (3121) die Halteliste unter Bezug auf die Attributinformation erzeugt.

4. System nach Anspruch 3, wobei
die eine oder die mehreren Vorschriften mindestens eine Vorschrift unter einer Vorschrift, die die Attributinformation spezifiziert, die in der Halteliste aufgezeichnete Daten haben müssen, und einer Vorschrift enthalten, die die Attributinformationen spezifiziert, die nicht in der Halteliste aufgezeichnete Daten haben müssen.

5. System nach Anspruch 3 oder 4, wobei die Attributinformation über die Daten mindestens ein Attribut unter einem Attribut bezüglich einer Zeitdauer, in der die Daten für das andere Kommunikationsendgerät (110, 120; 210, 220) bereitgestellt werden, einem Attribut bezüglich eines Orts, an dem die Daten für das andere Kommunikationsendgerät (110, 120; 210, 220) bereitgestellt werden, und einem Attribut bezüglich der Art und Weise der Verteilung der Daten aufweist.

6. System nach Anspruch 5, wobei ein Regionenname als ein Attributwert des Attributs bezüglich des Orts verwendet wird.

7. System nach Anspruch 5, wobei eine Positionskoordinate als ein Attributwert des Attributs bezüglich des Orts verwendet wird.

8. Kommunikationsendgerät (110, 120; 210, 220), das dazu geeignet ist, eine Kommunikationsnachricht drahtlos an ein anderes Kommunikationsendgerät (110, 120; 210, 220) zu übertragen und drahtlos davon zu empfangen, wobei das Kommunikationsendgerät (110, 120; 210, 220) aufweist:
eine Datenspeichereinheit (111, 121; 211, 221), die mindestens ein Datenelement speichert;
eine Haltelistenerzeugungseinheit (212, 222), die eine Halteliste erzeugt, in der Information über übrige Daten gespeichert ist, die durch Entfernen mindestens eines Datenelements, das nicht mit einem anderen Kommunikationsendgerät (110, 120; 210, 220) ausgetauscht werden soll, von den in der Datenspeichereinheit (111, 121; 211, 221) gespeicherten Daten erhalten wird;
eine Datenbereitstellungseinheit (113, 123; 213, 223), die die erzeugte Halteliste unter Verwendung der Kommunikationsnachricht an das andere Kommunikationsendgerät (110, 120; 210, 220) überträgt und die vom anderen Kommunikationsendgerät (110, 120; 210, 220) durch die Kommunikationsnachricht angeforderten Daten von der Datenspeichereinheit (111, 121; 211, 221) ausliest und die angeforderten Daten durch die Kommunikationsnachricht an das andere Kommunikationsendgerät (110, 120; 210, 220) überträgt; und
eine Datenbeschaffungseinheit (114, 124; 214, 224), die Daten, die nicht in der Datenspeichereinheit (111, 121; 211, 221) gespeichert sind, unter Daten in der Halteliste bestimmt, die von dem anderen Kommunikationsendgerät (110, 120; 210, 220) durch die Kommunikationsnachricht empfangen wurden, und die bestimmten Daten durch die Kommunikationsnachricht von dem anderen Kommunikationsendgerät (110, 120; 210, 220) anfordert, und
eine Wunschdatenspeichereinheit (215, 315), die Information über Daten speichert, deren Beschaffung gewünscht wird, wobei
die Datenbeschaffungseinheit (114, 124; 214, 224) bestimmt, ob die Information über die Daten, deren Beschaffung gewünscht wird, in der vom anderen Kommunikationsendgerät (110, 120; 210, 220) empfangenen Halteliste aufgezeichnet ist oder nicht, und, wenn die Information aufgezeichnet ist, die bestimmten Daten vom anderen Kommunikationsendgerät (110, 120; 210, 220) anfordert, und, wenn die Information nicht aufgezeichnet ist, eine Wunschliste, in der die Information über die Daten aufgezeichnet ist, deren Beschaffung gewünscht ist, durch die Kommunikationsnachricht an das andere Kommunikationsendgerät (110, 120; 210, 220) überträgt, und Daten, die nicht in der Datenspeichereinheit (111, 121; 211, 221) gespeichert sind, unter den Daten in der wieder erzeugten Halteliste bestimmt, die vom anderen Kommunikationsendgerät (110, 120; 210, 220) durch die Kommunikationsnachricht empfangen wurden, nachdem die Wunschliste an das andere Kommunikationsendgerät (110, 120; 210, 220) übertragen worden ist, und die bestimmten Daten durch die Kommunikationsnachricht vom anderen Kommunikationsendgerät (110, 120; 210, 220) anfordert, und
wobei, nachdem die Halteliste durch die Kommunikationsnachricht an das andere Kommunikationsendgerät (110, 120; 210, 220) übertragen worden ist, wenn die Datenbereitstellungseinheit (113, 123; 213, 223) die Wunschliste vom anderen Kommunikationsendgerät (110, 120; 210, 220) durch die Kommunikationsnachricht als Antwort auf die Kommunikationsnachricht empfängt, die Datenbereitstellungseinheit (113, 123; 213, 223) die empfangene Wunschliste an die Haltelistenerzeugungseinheit (212, 222) übermittelt und die durch die Haltelistenerzeugungseinheit (212, 222) wieder erzeugte Halteliste durch die Kommunikationsnachricht an das andere Kommunikationsendgerät (110, 120; 210, 220) überträgt, und
wobei die Haltelistenerzeugungseinheit (212, 222) Information über die in der Datenspeichereinheit (111, 121; 211, 221) gespeicherten Daten unter den Daten in der von der Datenbereitstellungseinheit (113, 123; 213, 223) übermittelten Wunschliste zur erzeugten Halteliste hinzufügt und dadurch die Halteliste wieder erzeugt.

9. Kommunikationsendgerät (110, 120; 210, 220) nach Anspruch 8, wobei
die Haltelistenerzeugungseinheit (212, 222) aufweist:
eine Vorschriftenspeichereinheit (3122), die eine oder mehrere Vorschriften speichert, und
eine Recheneinheit (3121), die die Halteliste gemäß der Vorschrift erzeugt.

10. Kommunikationsendgerät (110, 120; 210, 220) nach Anspruch 9, wobei
die in der Datenspeichereinheit (111, 121; 211, 221) gespeicherten Daten aus einem Datenhauptkörper und Attributinformation aufgebaut sind, und
die Recheneinheit (3121) die Halteliste unter Bezug auf die Attributinformation erzeugt.

11. Kommunikationsendgerät (110, 120; 210, 220) nach Anspruch 10, wobei
die eine oder die mehreren Vorschriften mindestens eine Vorschrift unter einer Vorschrift, die die Attributinformation spezifiziert, die die in der Halteliste aufgezeichneten Daten haben müssen, und einer Vorschrift enthält, die die Attributinformationen spezifiziert, die nicht in der Halteliste aufgezeichnete Daten haben müssen.

12. Kommunikationsendgerät (110, 120; 210, 220) nach Anspruch 10 oder 11, wobei die Attributinformation über die Daten mindestens ein Attribut unter einem Attribut bezüglich einer Zeitdauer, in der die Daten für das andere Kommunikationsendgerät (110, 120; 210, 220) bereitgestellt werden, einem Attribut bezüglich eines Orts, an dem die Daten für das andere Kommunikationsendgerät (110, 120; 210, 220) bereitgestellt werden, und einem Attribut bezüglich der Art und Weise der Verteilung der Daten aufweist.

13. Kommunikationsendgerät (110, 120; 210, 220) nach Anspruch 12, wobei ein Regionenname als ein Attributwert des Attributs bezüglich des Orts verwendet wird.

14. Kommunikationsendgerät (110, 120; 210, 220) nach Anspruch 12, wobei eine Positionskoordinate als ein Attributwert des Attributs bezüglich des Orts verwendet wird.

15. Datenaustauschverfahren, in dem Daten zwischen einem ersten Kommunikationsendgerät (110, 120; 210, 220) und einem zweiten Kommunikationsendgerät (110, 120; 210, 220) ausgetauscht werden, die dazu geeignet sind, eine Kommunikationsnachricht drahtlos zueinander zu übertragen und voneinander zu empfangen, wobei das Datenaustauschverfahren aufweist:
einen ersten Schritt, in dem das erste Kommunikationsendgerät (110, 120; 210, 220) eine Halteliste erzeugt, in der Information über übrige Daten aufgezeichnet ist, die durch Entfernen mindestens eines Datenelements, das nicht mit dem zweiten Kommunikationsendgerät (110, 120; 210, 220) ausgetauscht werden soll, von durch das Kommunikationsendgerät (110, 120; 210, 220) selbst gehaltenen Daten erhalten werden, und die Halteliste durch die Kommunikationsnachricht an das zweite Kommunikationsendgerät (110, 120; 210, 220) überträgt;
einen zweiten Schritt, in dem das zweite Kommunikationsendgerät (110, 120; 210, 220) Daten, die das Kommunikationsendgerät (110, 120; 210, 220) selbst nicht hält, unter Daten in der Halteliste bestimmt, die vom ersten Kommunikationsendgerät (110, 120; 210, 220) durch die Kommunikationsnachricht empfangen wurden, und die bestimmten Daten durch die Kommunikationsnachricht vom ersten Kommunikationsendgerät (110, 120; 210, 220) anfordert; und
einen dritten Schritt, in dem das erste Kommunikationsendgerät (110, 120; 210, 220) Daten, die durch die Kommunikationsnachricht vom zweiten Kommunikationsendgerät (110, 120; 210, 220) angefordert werden, durch die Kommunikationsnachricht an das zweite Kommunikationsendgerät (110, 120; 210, 220) überträgt,
wobei das zweite Kommunikationsendgerät (110, 120; 210, 220) eine Wunschdatenspeichereinheit (215, 315) aufweist, in der Information über Daten gespeichert ist, deren Beschaffung gewünscht ist, und
wobei im zweiten Schritt das zweite Kommunikationsendgerät (110, 120; 210, 220) bestimmt, ob die Daten, deren Beschaffung gewünscht ist, in der Halteliste aufgezeichnet sind, die durch die Kommunikationsnachricht vom ersten Kommunikationsendgerät (110, 120; 210, 220) empfangen wurden, und
in dem Fall, in dem die Daten aufgezeichnet sind, Daten, die das Kommunikationsendgerät (110, 120; 210, 220) selbst nicht hält, unter den Daten in der empfangenen Halteliste bestimmt, und
in dem Fall, in dem die Daten nicht aufgezeichnet sind, eine Wunschliste, in der Information über die Daten aufgezeichnet ist, deren Beschaffung gewünscht ist, durch die Kommunikationsnachricht an das erste Kommunikationsendgerät (110, 120; 210, 220) überträgt, und Daten, die nicht in der Datenspeichereinheit (111, 121; 211, 221) gespeichert sind, unter den Daten in der wieder erzeugten Halteliste bestimmt, die vom ersten Kommunikationsendgerät (110, 120; 210, 220) durch die Kommunikationsnachricht empfangen werden, nachdem die Wunschliste an das erste Kommunikationsendgerät (110, 120; 210, 220) übertragen worden ist,
und Daten, die in jedem der Fälle bestimmt wurden, durch die Kommunikationsnachricht vom ersten Kommunikationsendgerät (110, 120; 210, 220) anfordert.

16. Datenaustauschverfahren, in dem ein Kommunikationsendgerät (110, 120; 210, 220), das eine Datenspeichereinheit (111, 121; 211, 221) aufweist, die mindestens ein Datenelement speichert, und das dazu geeignet ist, eine Kommunikationsnachricht zu einem anderen Kommunikationsendgerät (110, 120; 210, 220) drahtlos zu übertragen und drahtlos davon zu empfangen, Daten mit dem anderen Kommunikationsendgerät (110, 120; 210, 220) austauscht, wobei das Datenaustauschverfahren aufweist:
einen ersten Schritt zum Erzeugen einer Halteliste, in der Information über übrige Daten aufgezeichnet ist, die durch Entfernen mindestens eines Datenelements, das nicht mit dem anderen Kommunikationsendgerät (110, 120; 210, 220) ausgetauscht werden soll, von in der Datenspeichereinheit (111, 121; 211, 221) gespeicherten Daten erhalten wird, und zum Übertragen der Halteliste an das andere Kommunikationsendgerät (110, 120; 210, 220) durch die Kommunikationsnachricht;
einen zweiten Schritt zum Empfangen der Kommunikationsnachricht, die Daten in der übertragenen Halteliste anfordert, vom anderen Kommunikationsendgerät (110, 120; 210, 220) und Lesen der durch die Kommunikationsnachricht angeforderten Daten von der Datenspeichereinheit (111, 121; 211, 221) und zum Übertragen der angeforderten Daten an das andere Kommunikationsendgerät (110, 120; 210, 220) durch die Kommunikationsnachricht; und
einen dritten Schritt, in dem, wenn eine Wunschliste, in der Information über Daten aufgezeichnet ist, die nicht in der übertragenen Halteliste enthalten sind, vom anderen Kommunikationsendgerät (110, 120; 210, 220) empfangen wird, Information über die in der Datenspeichereinheit (111, 121; 211, 221) gespeicherten Daten unter den Daten in der empfangenen Wunschliste zur erzeugten Halteliste hinzugefügt werden, wodurch die Halteliste wieder erzeugt wird, und die Halteliste durch die Kommunikationsnachricht an das andere Kommunikationsendgerät (110, 120; 210, 220) übertragen wird.

17. Programm, das einen Computer, der ein Kommunikationsendgerät (110, 120; 210, 220) implementiert, das dazu geeignet ist, eine Kommunikationsnachricht drahtlos an ein anderes Kommunikationsendgerät (110, 120; 210, 220) zu übertragen und drahtlos davon zu empfangen, veranlasst zu funktionieren als:
eine Datenspeichereinheit (111, 121; 211, 221), die mindestens ein Datenelement speichert;
eine Haltelistenerzeugungseinheit (212, 222), die eine Halteliste erzeugt, in der Information über übrige Daten gespeichert ist, die durch Entfernen mindestens eines Datenelements, das nicht mit einem anderen Kommunikationsendgerät (110, 120; 210, 220) ausgetauscht werden soll, von in der Datenspeichereinheit (111, 121; 211, 221) gespeicherten Daten erhalten wird;
eine Datenbereitstellungseinheit (113, 123; 213, 223), die die erzeugte Halteliste unter Verwendung der Kommunikationsnachricht an das andere Kommunikationsendgerät (110, 120; 210, 220) überträgt und die vom anderen Kommunikationsendgerät (110, 120; 210, 220) durch die Kommunikationsnachricht angeforderten Daten von der Datenspeichereinheit (111, 121; 211, 221) ausliest und die angeforderten Daten durch die Kommunikationsnachricht an das andere Kommunikationsendgerät (110, 120; 210, 220) überträgt; und
eine Datenbeschaffungseinheit (114, 124; 214, 224), die Daten, die nicht in der Datenspeichereinheit (111, 121; 211, 221) gespeichert sind, unter Daten in der Halteliste bestimmt, die von dem anderen Kommunikationsendgerät (110, 120; 210, 220) durch die Kommunikationsnachricht empfangen wurden, und die bestimmten Daten durch die Kommunikationsnachricht von dem anderen Kommunikationsendgerät (110, 120; 210, 220) anfordert, und
eine Wunschdatenspeichereinheit (215, 315), die Information über Daten speichert, deren Beschaffung gewünscht wird, wobei
die Datenbeschaffungseinheit (114, 124; 214, 224) bestimmt, ob die Daten, deren Beschaffung gewünscht wird, in der vom anderen Kommunikationsendgerät (110, 120; 210, 220) empfangenen Halteliste aufgezeichnet sind oder nicht, und,
wenn die Daten aufgezeichnet sind, die bestimmten Daten vom anderen Kommunikationsendgerät (110, 120; 210, 220) anfordert, und,
wenn die Daten nicht aufgezeichnet sind, eine Wunschliste, in der Information über die Daten aufgezeichnet ist, deren Beschaffung gewünscht ist, durch die Kommunikationsnachricht an das andere Kommunikationsendgerät (110, 120; 210, 220) überträgt, und Daten, die nicht in der Datenspeichereinheit (111, 121; 211, 221) gespeichert sind, unter den Daten in der wieder erzeugten Halteliste, die vom anderen Kommunikationsendgerät (110, 120; 210, 220) durch die Kommunikationsnachricht empfangen wurden, bestimmt, nachdem die Wunschliste an das andere Kommunikationsendgerät (110, 120; 210, 220) übertragen worden ist, und die bestimmten Daten durch die Kommunikationsnachricht vom anderen Kommunikationsendgerät (110, 120; 210, 220) anfordert, und
wobei, nachdem die Halteliste durch die Kommunikationsnachricht an das andere Kommunikationsendgerät (110, 120; 210, 220) übertragen worden ist, wenn die Datenbereitstellungseinheit (113, 123; 213, 223) die Wunschliste vom anderen Kommunikationsendgerät (110, 120; 210, 220) durch die Kommunikationsnachricht als Antwort auf die Kommunikationsnachricht empfängt, die Datenbereitstellungseinheit (113, 123; 213, 223) die empfangene Wunschliste an die Haltelistenerzeugungseinheit (212, 222) übermittelt und die durch die Haltelistenerzeugungseinheit (212, 222) wieder erzeugte Halteliste durch die Kommunikationsnachricht an das andere Kommunikationsendgerät (110, 120; 210,220) überträgt, und
wobei die Haltelistenerzeugungseinheit (212, 222) Information über die in der Datenspeichereinheit (111, 121; 211, 221) gespeicherten Daten unter den Daten, die in der von der Datenbereitstellungseinheit (113, 123; 213, 223) übermittelten Wunschliste gespeichert sind, zur erzeugten Halteliste hinzufügt und dadurch die Halteliste wieder erzeugt.

## Revendications

1. Système de partage de données où des données sont partagées entre une pluralité de terminaux de communication (110, 120 ; 210, 220) aptes à transmettre sans fil l'un à l'autre et à recevoir sans fil l'un de l'autre un message de communication,
chacun des terminaux de communication (110, 120 ; 210, 220) comprenant :
une unité de stockage de données (111, 121 ; 211, 221) stockant au moins une donnée ; une unité de création de liste de maintien (212, 222) générant une liste de maintien enregistrée avec des informations relatives aux données restantes obtenues par le retrait des données stockées dans l'unité de stockage de données (111, 121 ; 211, 221) d'au moins une donnée dont le partage avec un autre terminal de communication (110, 120 ; 210, 220) n'est pas envisagé ;
une unité de fourniture de données (113, 123 ; 213, 223) adressant la liste de maintien créée à l'autre terminal de communication (110, 120 ; 210, 220) au moyen du message de communication, extrayant de l'unité de stockage de données (111, 121 ; 211, 221) les données demandées par l'autre terminal de communication (110, 120 ; 210, 220) par le message de communication et adressant les données demandées à l'autre terminal de communication (110, 120 ; 210, 220) par le message de communication ; et
une unité d'acquisition de données (114, 124 ; 214, 224) déterminant les données non stockées dans l'unité de stockage de données (111, 121 ; 211, 221), parmi des données dans la liste de maintien reçue de l'autre terminal de communication (110, 120 ; 210, 220) par le message de communication, et demandant à l'autre terminal de communication (110, 120 ; 210, 220) les données déterminées par le message de communication, où
chacun des terminaux de communication (110, 120 ; 210, 220) comprend une unité de stockage de données souhaitées (215, 315) stockant des informations relatives à des données dont l'acquisition est souhaitée, où
l'unité d'acquisition de données (114, 124 ; 214, 224) détermine si les informations relatives aux données dont l'acquisition est souhaitée sont enregistrées ou non dans la liste de maintien reçue de l'autre terminal de communication (110, 120 ; 210, 220), et, si les informations sont enregistrées, demande les données déterminées à l'autre terminal de communication (110, 120 ; 210, 220), et, si l'information n'est pas enregistrée, adresse une liste de souhaits enregistrée avec les informations relatives aux données dont l'acquisition est souhaitée à l'autre terminal de communication (110, 120 ; 210, 220) par le message de communication, et détermine les données non stockées dans l'unité de stockage de données (111, 121 ; 211, 221), parmi les données dans la liste de maintien re-créée reçue de l'autre terminal de communication (110, 120 ; 210, 220) par le message de communication après que la liste de souhaits a été adressée à l'autre terminal de communication (110, 120 ; 210, 220), et demande les données déterminées par le message de communication à l'autre terminal de communication (110, 120 ; 210, 220), et où,
une fois adressée la liste de maintien à l'autre terminal de communication (110, 120 ; 210, 220) par le message de communication, si l'unité de fourniture de données (113, 123 ; 213, 223) reçoit la liste de souhaits de l'autre terminal de communication (110, 120 ; 210, 220) par le message de communication, en tant que réponse au message de communication, l'unité de fourniture de données (113, 123 ; 213, 223) notifie la liste de souhaits reçue à l'unité de création de liste de maintien (212, 222), et adresse la liste de maintien re-créée par l'unité de création de liste de maintien (212, 222) à l'autre terminal de communication (110, 120 ; 210, 220) par le message de communication, et où l'unité de création de liste de maintien (212, 222) ajoute à la liste de maintien créée des informations relatives aux données stockées dans l'unité de stockage de données (111, 121 ; 211, 221), parmi les données dans la liste de souhaits notifiée par l'unité de fourniture de données (113, 123 ; 213, 223), et re-crée ainsi la liste de maintien.

2. Système de partage de données selon la revendication 1, où
l'unité de création de liste de maintien (212, 222) comprend
une unité de stockage de règles (3122) stockant une ou plusieurs règles, et
une unité de calcul (3121) générant la liste de maintien conformément à la règle.

3. Système de partage de données selon la revendication 2, où
les données stockées dans l'unité de stockage de données (111, 121 ; 211, 221) sont constituées d'un corps principal de données et d'informations attributs, et
l'unité de calcul (3121) génère la liste de maintien par référence aux informations attributs.

4. Système de partage de données selon la revendication 3, où
la ou les règles comprennent une règle spécifiant les informations attributs dont ont besoin les données enregistrées dans la liste de maintien et/ou une règle spécifiant les informations attributs dont ont besoin les données non enregistrées dans la liste de maintien.

5. Système de partage de données selon la revendication 3 ou 4, où
les informations attributs relatives aux données comprennent un attribut relatif à une période où les données sont fournies à l'autre terminal de communication (110, 120 ; 210, 220) et/ou un attribut relatif à un lieu où les données sont fournies à l'autre terminal de communication (110, 120 ; 210, 220) et/ou un attribut relatif à un type de distribution des données.

6. Système de partage de données selon la revendication 5, où
un nom de région est utilisé en tant que valeur d'attribut de l'attribut relatif au lieu.

7. Système de partage de données selon la revendication 5, où
une coordonnée de position est utilisée en tant que valeur d'attribut de l'attribut relatif au lieu.

8. Terminal de communication (110, 120 ; 210, 220) apte à transmettre sans fil à un autre terminal de communication, et à recevoir sans fil de l'autre terminal de communication (110, 120 ; 210, 220) un message de communication, ledit terminal de communication (110, 120 ; 210, 220) comprenant :
une unité de stockage de données (111, 121 ; 211, 221) stockant au moins une donnée ;
une unité de création de liste de maintien (212, 222) générant une liste de maintien enregistrée avec des informations relatives aux données restantes obtenues par le retrait des données stockées dans l'unité de stockage de données (111, 121 ; 211, 221) d'au moins une donnée dont le partage avec un autre terminal de communication (110, 120 ; 210, 220) n'est pas envisagé ;
une unité de fourniture de données (113, 123 ; 213, 223) adressant la liste de maintien créée à l'autre terminal de communication (110, 120 ; 210, 220) au moyen du message de communication, extrayant de l'unité de stockage de données (111, 121 ; 211, 221) les données demandées par l'autre terminal de communication (110, 120 ; 210, 220) par le message de communication et adressant les données demandées à l'autre terminal de communication (110, 120 ; 210, 220) par le message de communication ;
une unité d'acquisition de données (114, 124 ; 214, 224) déterminant les données non stockées dans l'unité de stockage de données (111, 121 ; 211, 221), parmi des données dans la liste de maintien reçue de l'autre terminal de communication (110, 120 ; 210, 220) par le message de communication, et demandant à l'autre terminal de communication (110, 120 ; 210, 220) les données déterminées par le message de communication ; et
une unité de stockage de données souhaitées (215, 315) stockant des informations relatives à des données dont l'acquisition est souhaitée, où
l'unité d'acquisition de données (114, 124 ; 214, 224) détermine si les informations relatives aux données dont l'acquisition est souhaitée sont enregistrées ou non dans la liste de maintien reçue de l'autre terminal de communication (110, 120 ; 210, 220), et, si les informations sont enregistrées, demande les données déterminées à l'autre terminal de communication (110, 120 ; 210, 220), et, si l'information n'est pas enregistrée, adresse une liste de souhaits enregistrée avec les informations relatives aux données dont l'acquisition est souhaitée à l'autre terminal de communication (110, 120 ; 210, 220) par le message de communication, et détermine les données non stockées dans l'unité de stockage de données (111, 121 ; 211, 221), parmi les données dans la liste de maintien re-créée reçue de l'autre terminal de communication (110, 120 ; 210, 220) par le message de communication après que la liste de souhaits a été adressée à l'autre terminal de communication (110, 120 ; 210, 220), et demande les données déterminées par le message de communication à l'autre terminal de communication (110, 120 ; 210, 220), et où,
une fois adressée la liste de maintien à l'autre terminal de communication (110, 120 ; 210, 220) par le message de communication, si l'unité de fourniture de données (113, 123 ; 213, 223) reçoit la liste de souhaits de l'autre terminal de communication (110, 120 ; 210, 220) par le message de communication, en tant que réponse au message de communication, l'unité de fourniture de données (113, 123 ; 213, 223) notifie la liste de souhaits reçue à l'unité de création de liste de maintien (212, 222), et adresse la liste de maintien re-créée par l'unité de création de liste de maintien (212, 222) à l'autre terminal de communication (110, 120 ; 210, 220) par le message de communication, et où
l'unité de création de liste de maintien (212, 222) ajoute à la liste de maintien créée des informations relatives aux données stockées dans l'unité de stockage de données (111, 121 ; 211, 221), parmi les données dans la liste de souhaits notifiée par l'unité de fourniture de données (113, 123 ; 213, 223), et re-crée ainsi la liste de maintien.

9. Terminal de communication (110, 120 ; 210, 220) selon la revendication 8, où l'unité de création de liste de maintien (212, 222) comprend
une unité de stockage de règles (3122) stockant une ou plusieurs règles, et
une unité de calcul (3121) générant la liste de maintien conformément à la règle.

10. Terminal de communication (110, 120 ; 210, 220) selon la revendication 9, où
les données stockées dans l'unité de stockage de données (111, 121 ; 211, 221) sont constituées d'un corps principal de données et d'informations attributs, et
l'unité de calcul (3121) génère la liste de maintien par référence aux informations attributs.

11. Terminal de communication (110, 120 ; 210, 220) selon la revendication 10, où
la ou les règles comprennent une règle spécifiant les informations attributs dont ont besoin les données enregistrées dans la liste de maintien et/ou une règle spécifiant les informations attributs dont ont besoin les données non enregistrées dans la liste de maintien.

12. Terminal de communication (110, 120 ; 210, 220) selon la revendication 10 ou la revendication 11, où
les informations attributs relatives aux données comprennent un attribut relatif à une période où les données sont fournies à l'autre terminal de communication (110, 120 ; 210, 220) et/ou un attribut relatif à un lieu où les données sont fournies à l'autre terminal de communication (110, 120 ; 210, 220) et/ou un attribut relatif à un type de distribution des données.

13. Terminal de communication (110, 120 ; 210, 220) selon la revendication 12, où
un nom de région est utilisé en tant que valeur d'attribut de l'attribut relatif au lieu.

14. Terminal de communication (110, 120 ; 210, 220) selon la revendication 12, où
une coordonnée de position est utilisée en tant que valeur d'attribut de l'attribut relatif au lieu.

15. Procédé de partage de données, où des données sont partagées entre un premier terminal de communication (110, 120 ; 210, 220) et un deuxième terminal de communication (110, 120 ; 210, 220) aptes à transmettre sans fil l'un à l'autre et à recevoir sans fil l'un de l'autre un message de communication, ledit procédé de partage de données comprenant
une première étape où le premier terminal de communication (110, 120 ; 210, 220) génère une liste de maintien enregistrée avec des informations relatives aux données restantes obtenues par le retrait des données détenues par the terminal de communication (110, 120 ; 210, 220) en tant que tel, d'au moins une donnée dont le partage avec le deuxième terminal de communication (110, 120 ; 210, 220) n'est pas envisagé, et adresse la liste de maintien au deuxième terminal de communication (110, 120 ; 210, 220) par le message de communication,
une deuxième étape où le deuxième terminal de communication (110, 120 ; 210, 220) détermines les données que le terminal de communication (110, 120 ; 210, 220) en tant que tel ne détient pas, parmi les données dans la liste de maintien reçues du premier terminal de communication (110, 120 ; 210, 220) par le message de communication, et demande les données déterminées par le message de communication au premier terminal de communication (110, 120 ; 210, 220), et
une troisième étape où le premier terminal de communication (110, 120 ; 210, 220) adresse les données demandées par le deuxième terminal de communication (110, 120 ; 210, 220) par le message de communication au deuxième terminal de communication (110, 120 ; 210, 220) par le message de communication,
où
le deuxième terminal de communication (110, 120 ; 210, 220) comprend une unité de stockage de données souhaitées (215, 315) stockant des informations relatives à des données dont l'acquisition est souhaitée, et où
lors de la deuxième étape, le deuxième terminal de communication (110, 120 ; 210, 220) détermine si les données dont l'acquisition est souhaitée sont enregistrées dans la liste de maintien reçue du premier terminal de communication (110, 120 ; 210, 220) par le message de communication, et,
dans le cas où les données sont enregistrées, détermine les données que le terminal de communication (110, 120 ; 210, 220) en tant que tel ne détient pas, parmi les données dans la liste de maintien reçue, et,
dans le cas où les données ne sont pas enregistrées, adresse une liste de souhaits enregistrée avec des informations relatives aux données dont l'acquisition est souhaitée au premier terminal de communication (110, 120 ; 210, 220) par le message de communication, et détermine les données non stockées dans l'unité de stockage de données (111, 121 ; 211, 221), parmi les données dans la liste de maintien re-créée reçue du premier terminal de communication (110, 120 ; 210, 220) par le message de communication après que la liste de souhaits a été adressée au premier terminal de communication (110, 120; 210, 220),
et demande au premier terminal de communication (110, 120 ; 210, 220) les données déterminées dans l'un des cas par le message de communication.

16. Procédé de partage de données, où un terminal de communication (110, 120 ; 210, 220), comprenant une unité de stockage de données (111, 121 ; 211, 221) stockant au moins une donnée, et apte à transmettre sans fil à un autre terminal de communication, et à recevoir sans fil de l'autre terminal de communication (110, 120 ; 210, 220) un message de communication, partage des données avec l'autre terminal de communication (110, 120 ; 210, 220), ledit procédé de partage de données comprenant :
une première étape de création d'une liste de maintien enregistrée avec des informations relatives aux données restantes obtenues par le retrait des données stockées dans l'unité de stockage de données (111, 121 ; 211, 221) d'au moins une donnée dont le partage avec un autre terminal de communication (110, 120 ; 210, 220) n'est pas envisagé, et de transmission de la liste de maintien à l'autre terminal de communication (110, 120 ; 210, 220) par le message de communication ;
une deuxième étape de réception de l'autre terminal de communication (110, 120 ; 210, 220) du message de communication demandant les données dans la liste de maintien transmise, et d'extraction de l'unité de stockage de données (111, 121 ; 211, 221) des données demandées par le message de communication, et de transmission des données demandées à l'autre terminal de communication (110, 120 ; 210, 220) par le message de communication ; et,
si une liste de souhaits enregistrée avec des informations relatives à des données non contenues dans la liste de maintien sent est reçue de l'autre terminal de communication (110, 120 ; 210, 220), une troisième étape d'ajout à la liste de maintien créée des informations relatives aux données stockées dans l'unité de stockage de données (111, 121 ; 211, 221), parmi les données dans la liste de souhaits reçue, et de re-création en conséquence de la liste de maintien, et de transmission de la liste de maintien à l'autre terminal de communication (110, 120 ; 210, 220) par le message de communication.

17. Programme, entraînant
un ordinateur constituant un terminal de communication (110, 120 ; 210, 220) apte à transmettre sans fil d'un autre terminal de communication (110, 120 ; 210, 220) et à recevoir sans fil de celui-ci un message de communication, à fonctionner comme :
une unité de stockage de données (111, 121 ; 211, 221) stockant au moins une donnée ;
une unité de création de liste de maintien (212, 222) générant une liste de maintien enregistrée avec des informations relatives aux données restantes obtenues par le retrait des données stockées dans l'unité de stockage de données (111, 121 ; 211, 221) d'au moins une donnée dont le partage avec un autre terminal de communication (110, 120 ; 210, 220) n'est pas envisagé ;
une unité de fourniture de données (113, 123 ; 213, 223) adressant la liste de maintien créée à l'autre terminal de communication (110, 120 ; 210, 220) au moyen du message de communication, extrayant de l'unité de stockage de données (111, 121 ; 211, 221) les données demandées par l'autre terminal de communication (110, 120 ; 210, 220) par le message de communication et adressant les données demandées à l'autre terminal de communication (110, 120 ; 210, 220) par le message de communication ;
une unité d'acquisition de données (114, 124 ; 214, 224) déterminant les données non stockées dans l'unité de stockage de données (111, 121 ; 211, 221), parmi des données dans la liste de maintien reçue de l'autre terminal de communication (110, 120 ; 210, 220) par le message de communication, et demandant à l'autre terminal de communication (110, 120 ; 210, 220) les données déterminées par le message de communication ; et
une unité de stockage de données souhaitées (215, 315) stockant des informations relatives à des données dont l'acquisition est souhaitée, où
l'unité d'acquisition de données (114, 124 ; 214, 224) détermine si les données dont l'acquisition est souhaitée sont enregistrées ou non dans la liste de maintien reçue de l'autre terminal de communication (110, 120 ; 210, 220), et,
si les données sont enregistrées, demande les données déterminées à l'autre terminal de communication (110, 120 ; 210, 220), et,
si les données ne sont pas enregistrée, adresse une liste de souhaits enregistrée avec les informations relatives aux données dont l'acquisition est souhaitée à l'autre terminal de communication (110, 120 ; 210, 220) par le message de communication, et détermine les données non stockées dans l'unité de stockage de données (111, 121 ; 211, 221), parmi les données dans la liste de maintien re-créée reçue de l'autre terminal de communication (110, 120 ; 210, 220) par le message de communication après que la liste de souhaits a été adressée à l'autre terminal de communication (110, 120 ; 210, 220), et demande les données déterminées par le message de communication à l'autre terminal de communication (110, 120 ; 210, 220), et où
une fois adressée la liste de maintien à l'autre terminal de communication (110, 120 ; 210, 220) par le message de communication, si l'unité de fourniture de données (113, 123 ; 213, 223) reçoit la liste de souhaits de l'autre terminal de communication (110, 120 ; 210, 220) par le message de communication, en tant que réponse au message de communication, l'unité de fourniture de données (113, 123 ; 213, 223) notifie la liste de souhaits reçue à l'unité de création de liste de maintien (212, 222), et adresse la liste de maintien re-créée par l'unité de création de liste de maintien (212, 222) à l'autre terminal de communication (110, 120 ; 210, 220) par le message de communication, et où
l'unité de création de liste de maintien (212, 222) ajoute à la liste de maintien créée des informations relatives aux données stockées dans l'unité de stockage de données (111, 121 ; 211, 221), parmi les données dans la liste de souhaits notifiée par l'unité de fourniture de données (113, 123 ; 213, 223), et re-crée ainsi la liste de maintien.
